(19) Europäisches Patentamt
European Patent Office
Office européen des brevets

(11) EP 4 700 063 A1

(12) **EUROPEAN PATENT APPLICATION**
published in accordance with Art. 153(4) EPC

(43) Date of publication:
**25.02.2026 Bulletin 2026/09**

(21) Application number: **24792035.8**

(22) Date of filing: **17.04.2024**

(51) International Patent Classification (IPC):
***C08G 63/91*** (2006.01) ***C08G 63/672*** (2006.01)
***D01F 6/70*** (2006.01) ***D01F 1/02*** (2006.01)
***C08G 18/42*** (2006.01) ***C08G 18/10*** (2006.01)
***C08G 18/48*** (2006.01) ***C08G 18/66*** (2006.01)

(52) Cooperative Patent Classification (CPC):
**C08G 18/10; C08G 18/42; C08G 18/48; C08G 18/66; C08G 63/672; C08G 63/91; D01F 1/02; D01F 6/70**

(86) International application number:
**PCT/CN2024/088284**

(87) International publication number:
**WO 2024/217450 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 CN 202310424908**
**16.04.2024 CN 202410455754**

(71) Applicant: **Zhengzhou Zhongyuan Spandex Engineering Technology Co., Ltd**
**Zhengzhou, Henan 450001 (CN)**

(72) Inventors:
- **QIAO, Jianqiang**
  **Zhengzhou, Henan 450001 (CN)**
- **CUI, Yuewei**
  **Zhengzhou, Henan 450001 (CN)**
- **ZHOU, Hua**
  **Zhengzhou, Henan 450001 (CN)**
- **JING, Jianlin**
  **Zhengzhou, Henan 450001 (CN)**
- **ZHANG, Yongqi**
  **Zhengzhou, Henan 450001 (CN)**
- **TIAN, Song**
  **Zhengzhou, Henan 450001 (CN)**
- **YE, Zhengrong**
  **Zhengzhou, Henan 450001 (CN)**
- **LI, Rui**
  **Zhengzhou, Henan 450001 (CN)**

(74) Representative: **Keltie LLP**
**No. 1 London Bridge**
**London SE1 9BA (GB)**

# (54) METHOD FOR PREPARING POLYETHER ESTER POLYOL AND PRODUCT THEREOF

(57) The present invention provides a method for preparing polyether ester polyols and products thereof. The method involves adding polyether diols and polyesters as raw materials into a reaction kettle, heating the reaction kettle to the reaction temperature to carry out a transesterification reaction, and distilling off the small-molecule polyols produced in the transesterification reaction by means of vacuum distillation, thereby preparing the polyether ester polyols. Wherein, the polyester contains an aromatic dibasic acid polyol ester structure; the polyether diols have a degree of polymerization of 2-20 and a molecular weight of 100-1000; the molar ratio of the aromatic group structure in the polyether diol to those in the polyester is greater than 1.05:1; and the reaction temperature is above the boiling point of the small-molecule polyols and below the boiling point of the polyether diols. The method provided by the present invention can directly process recycled polyesters into polyether ester polyols suitable for the production of polyurethane elastic fibers, which simplifies the polyether ester polyols production process for spandex production. While utilizing recycled resources, it also expands the source of raw materials for polyurethane elastic fibers. Additionally, the present invention provides an easily dyeable spandex prepared using polyether ester polyol and a preparation method thereof. In the process of preparing spandex, the polyether ester polyol provided by the present invention is added to the diol raw materials, causing the molecular

EP 4 700 063 A1

soft segment of the prepared spandex fiber to contain a specific aromatic group-polyether block structure. Compared with conventional spandex, the easily dyeable spandex of the present invention can increase the dye uptake rate and fixation capacity of spandex for disperse dyes and acid dyes without sacrificing the mechanical properties of the spandex. By adjusting the mass ratio of the above-mentioned aromatic group-polyether block structures in the molecular soft segment of spandex, the spandex has excellent alkali resistance while ensuring an acceptable dye uptake rate and fixation rate.

## Description

The present invention claims priority for the Chinese invention patent application with application number 202310424908.4, titled "A Method for Preparing Polyether Ester Polyols and Their Products", filed with the China National Intellectual Property Administration on April 18, 2023; and priority for the Chinese invention patent application with application number 202410455754.X, titled "An Easily Dyeable Spandex and Its Preparation Method", filed with the China National Intellectual Property Administration on April 16, 2024.

## Technical Field

The present invention relates to the field of methods for preparing polymers and products thereof, and specifically to a method for preparing polyether ester polyols and products thereof.

## Background technique

Polyesters are a class of engineering materials known for their excellent performance and wide applications. In particular, polyesters containing benzene rings in their structures-such as polyethylene terephthalate (PET), polytrimethylene terephthalate (PTT), and polybutylene terephthalate (PBT)-are particularly common. Used as fibers, bottles, films, or other plastic products, they are a type of plastic that has become indispensable in our daily lives. However, with the increased use of polyester plastic products, environmental problems caused by nondegradable polyester plastics have attracted growing public attention. Plastic recycling is an effective means to address this environmental issue. Currently, the main method for recycling polyester plastics is to melt down and pelletize plastic bottle flakes providing a recycled material which is then reprocessed into plastic products. However, this method has high requirements for the quality of recycled plastic bottle flakes: they must have a low impurity content, minimal color differences, and minimal molecular weight variations. There is a great deal of plastic waste that does not meet these criteria making it difficult to recycle and reuse. In addition to recycling and pelletizing, there are methods that involve removing impurities from recycled polyester plastics and then chemically decomposing them into terephthalic acid (PTA) or dimethyl terephthalate (DMT), which are then reused as chemical raw materials. However, this method involves complex processes, and it is difficult to ensure the purity of the resulting products, and thus its applications for recycled products are limited.

Spandex, otherwise known as polyurethane elastic fiber, is currently the most widely used elastic fiber. Spandex is a block copolymer consisting of soft segments and hard segments. The soft segments are generally composed of flexible chain segments, which are usually formed by the reaction of polyols such as polyethers, polyesters, end-hydroxyl-capped polybutadienes, and polyisocyanates used for linking the polyols; the hard segments are composed of chain segments with excellent crystallinity, which are usually formed by the reaction of polyisocyanates with small-molecule polyols and small-molecule amine based chain extenders. The mainstream spandex on the market is dry-spun polyether-based spandex. The main raw materials for dry-spun polyether-based spandex include polytetrahydrofuran ether diols, diphenylmethane diisocyanates and amine chain extenders. A polyurethane urea solution is prepared through a two-step polymerization reaction, and necessary additives are then added to form a polyurethane urea spinning dope, which is processed into spandex fibers via channel spinning. This method uses polytetrahydrofuran ether diol as the soft segment, and the resulting spandex fibers have balanced performance-usually high elastic elongation, with a tensile modulus that basically meets the requirements of daily clothing. However, this method is high cost and recycled materials cannot be utilized.

In practice, spandex is rarely used as a standalone fabric and is often blended with other types of fibers. Currently, the mainstream spandex on the market is polyether-based spandex prepared by dry spinning using polytetrahydrofuran ether diols and diisocyanates as raw materials. Conventional spandex is typically dyed with disperse dyes or acid dyes. However, in actual use, spandex has a poor dye uptake rate and poor fixation rate. After blending with other fibers and undergoing dyeing and finishing, color differences or "white exposure" may occur, significantly affecting the appearance of textile products. The reason lies in the molecular structure of spandex: it mainly consists of less polar polyether segments and more polar polyurethane or polyurethane urea segments. The polyether segment of mainstream spandex products is the residue of polytetrahydrofuran ether diol, which belongs to the amorphous region in the microphase-separated structure. This region has a loose structure, provides elasticity to the spandex fiber, and is the main site for disperse dye uptake-but its binding force with disperse dyes is weak. Theoretically, due to their hydrogen bonding and coordination bonding effects, the polyurethane or polyurethane urea parts can be dyed with acid, neutral, acid-mordant, and disperse dyes. However, these segments form crystalline regions with tightly packed molecular chains, making it difficult for dye molecules to diffuse into the interior of the crystalline regions, thus greatly reducing the dye uptake rate.

After extensive research, the inventors found that spandex with high elongation and high elastic recovery can also be prepared using polyether ester polyols with aromatic group-polyether blocks as the spandex soft segment. Adding a small amount of small-molecule diol structures to the block structure of the above polyether ester polyols allows

adjustment of the elastic modulus and elastic recovery rate of spandex. Moreover, the structure of this polyether ester polyol is similar to that of common polyesters, making it possible to use recycled polyester as the raw material for spandex. Typically, the preparation of such polyether ester polyols involves reacting dicarboxylic acids that possess aromatic groups with polyether diols. However, the process of preparing terephthalic acid from recycled polyesters is complex and energy-intensive, and purification is difficult.

Therefore, the present invention aims to provide a method for preparing polyether ester polyols suitable for spandex production using recycled polyesters, and a method for preparing easily dyeable spandex using polyether ester polyols, by which it aims to optimize both the polyether ester polyol production process and the performance of its products.

## Content of the Invention

To solve the above problems, the present invention provides a method for preparing polyether ester polyols suitable for spandex production using polyesters as raw materials, the polyether ester polyols prepared by this method, as well as polyurethane elastic fibers, non-woven fabrics, films, and elastomers prepared using these polyether ester polyols, and a method for preparing the same. The specific schemes being as follows:
One aspect of the present invention is that it provides a method for preparing polyether ester polyols, characterized by comprising the following steps:

Step 1) Adding polyether diols and polyesters as raw materials to a reaction kettle, wherein the polyesters contain an aromatic dibasic acid polyol ester structure; the polyether diols have a degree of polymerization of 2-20 and a molecular weight of 100-1000, and the molar ratio of aromatic groups in the polyether diol to those in the polyester is greater than 1.05:1;

Step 2) Heating the reaction kettle to the reaction temperature to carry out a transesterification reaction, and distilling off the small-molecule polyols produced in the transesterification reaction by means of vacuum distillation to prepare the polyether ester polyols, wherein the reaction temperature is higher than the boiling point of the small-molecule polyols and lower than the boiling point of the polyether diols.

In the above method, "aromatic dibasic acid polyol ester structure" refers to the ester structure in the polyester formed by the reaction of aromatic dibasic acids with polyols. Among them, the aromatic groups include aromatic ring structures and heterocyclic aromatic structures: the aromatic rings may be at least one of benzene rings, naphthalene rings, anthracene rings, phenanthrene rings, and other aromatic rings; the heterocyclic aromatic rings may be at least one of pyridine rings, furan rings, thiazole rings, pyrimidine rings, and the like. Specifically, the aromatic dibasic acids may be one or more of terephthalic acid, phthalic acid, isophthalic acid, biphenyldicarboxylic acid, 1,4-naphthalenedicarboxylic acid, 2,6-naphthalenedicarboxylic acid, 2,3-naphthalenedicarboxylic acid, 2,5-furandicarboxylic acid, p-phenylenediacetic acid, m-phenylenediacetic acid, and o-phenylenediacetic acid. The polyols may be one or more of diols, triols, and tetrols-preferably diols, and more preferably one or more of ethylene glycol, 1,3-propanediol, 1,2-propanediol, 1,4-butanediol, 1,6-hexanediol, neopentyl glycol, 2-methyl-1,3-propanediol, and 3-methyl-1,5-pentanediol.

Optionally, the polyesters containing an aromatic dibasic acid polyol ester structure in the present invention may be one or more of polyethylene terephthalate (PET), polybutylene terephthalate (PBT), polytrimethylene terephthalate (PTT), poly (butylene adipate-co-terephthalate) (PBAT), and polyethylene 2,5-furandicarboxylate (PEF). The polyesters containing an aromatic dibasic acid polyol ester structure may also be any other common polyesters containing polyether ester structures or triol/tetrol residue structures, provided that their main chains contain an aromatic dibasic acid polyol ester structure, they can be used as raw materials in the method of the present invention.

Optionally, the polyether diols are homopolymeric or copolymeric polyether diols prepared by the condensation polymerization of C2-C5 small-molecule diols or the ring-opening polymerization of C2-C5 epoxides. Specifically, they are preferably one or more of polyethylene glycol (PEG), poly-1,3-propanediol (P3OG), poly-1,2-propanediol (PPG), polytetrahydrofuran (PTG), polyethylene glycol-1,2-propanediol copolymers, and polytetrahydrofuran-3-methyltetrahydrofuran copolymers.

Optionally, the molar ratio of aromatic group structures in the polyether diol to those in the polyester is calculated by the following formula:

$$R=(W+P-36)/(W-A)$$

Where,

R is the molar ratio of aromatic group structures in the polyether diol to those in the polyester;
W is the molecular weight of the target polyether ester polyol, W being 1000-5000;

P is the molecular weight of the aromatic dibasic acid in the polyester raw materials;
A is the average molecular weight of the polyether diol.

Here, "the aromatic dibasic acid in the polyester raw materials" refers to the dibasic acid raw materials that form the aromatic dibasic acid polyol ester structure, such as terephthalic acid, phthalic acid, 2,5-furandicarboxylic acid, and the like as mentioned above.

A polyether ester polyol prepared by the method for preparing polyether ester polyols as described above, characterized in that it comprises structures represented by the following Formula (1) and Formula (2), and end-capped alcohol hydroxyl groups:

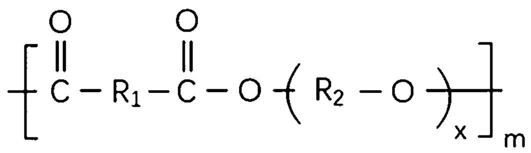
Formula (1)

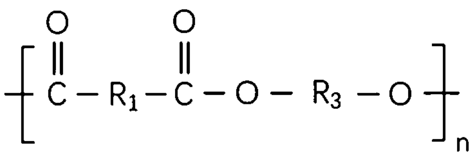
Formula (2)

Where $R_1$ is an aromatic group structure, and the mass content of $R_1$ in the repeating unit of Formula (1) is 4.5%-44%; $R_2$ is at least one saturated alkyl group having 2-5 carbon atoms; x is 2-20; $R_3$ is the residue of the polyol in the polyester raw material;

The mass ratio of Formula (2) in the structure of the polyether ester polyol is less than 20%, and preferably less than 10%;

The number-average molecular weight of the polyether ester polyol is 1000-5000;

The average functionality of the end-capped alcohol hydroxyl groups is 1.95-2.00.

Preferably, $R_2$ is at least two saturated alkyl groups having 2-5 carbon atoms.

The above-mentioned polyether ester polyols can be used not only for preparing spandex but also for preparing other polyurethane-based products. Therefore, the present invention also provides a method for preparing polyurethane elastic fibers, non-woven fabrics, films or elastomers by means of solution processing or melt processing using the above-mentioned polyether ester polyol or the polyether ester polyol prepared by the above-mentioned method as a raw material. It also provides polyurethane elastic fibers, non-woven fabrics, films, or elastomers prepared by the above method.

Additionally, the present invention provides an easily dyeable spandex, characterized in that the soft segment in the molecular structure of the easily dyeable spandex comprises repeating units represented by the following Formula (1):

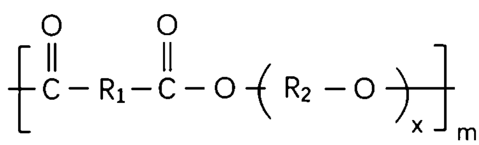
Formula (1)

Where $R_1$ is an aromatic group structure, and the mass content of $R_1$ in the repeating unit is 4.5%-44%; $R_2$ is at least one saturated alkyl group having 2-3 carbon atoms; x is 2-20;

The mass proportion of the repeating units represented by Formula (1) in the soft segment of the spandex is more than 2%, and preferably more than 5%, and more preferably more than 10%, and less than 70% and preferably less than 65%.

Optionally, the soft segment in the molecular structure of the spandex further comprises a polytetramethylene ether segment.

In the present invention, "mass of the soft segment" refers to the mass of the molecular structure of the part remaining after removing the end-capped alcohol hydroxyl groups from the reaction product of the diol raw materials (for spandex) and diisocyanates. "Diol raw materials" refers to the diol compounds used as polyurethane molecular weight soft segment raw materials, including the polyether ester polyols defined in the present invention and optional materials such as polytetrahydrofuran ether diol, but does not include small-molecule diol compounds that act as chain extenders.

The high-resilience thick-denier spandex can be prepared by dry spinning or melt spinning. Specifically, the preparation methods are as follows:

A method for preparing easily dyeable spandex, characterized by comprising the following steps:

Step 1): End-capping diol raw materials with diisocyanate raw materials to prepare a prepolymer;

Step 2): Dissolving the prepolymer with a polar solvent to obtain a prepolymer solution;

Step 3): Carrying out chain extension on the prepolymer using a mixed solution of a chain extender and a terminator to obtain a polyurethane/polyurethane urea solution;

Step 4): The addition of additives to prepare a spinning dope;

Step 5): Preparing the easily dyeable spandex by passing the prepared spinning dope through spinning equipment.

A method for preparing easily dyeable spandex, characterized by comprising the following steps:

Step a) Adding diisocyanate raw materials, diol raw materials, and small-molecule polyol chain extenders to a reaction vessel respectively;

Step b) Mixing the materials in the reaction vessel, and heating the materials during or after mixing to carry out the reaction, and performing extrusion and pelletization to prepare polyurethane pellets;

Step c) Drying the polyurethane pellets, adding additives, and then performing melt spinning to obtain the easily dyeable spandex.

In one embodiment of the present invention, the diol raw materials include polyether ester polyols with an aromatic group-polyether block structure; the polyether ester polyols comprise repeating units represented by Formula (1) and end-capped alcohol hydroxyl groups:

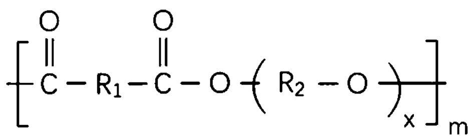

Formula (1)

Where $R_1$ is an aromatic group structure, and the mass content of $R_1$ in the repeating unit is 4.5%-44%; $R_2$ is at least one straight-chain saturated alkyl group with 2-3 carbon atoms; x is 2-20, and preferably 3-10; the average functionality of the end-capped alcohol hydroxyl groups is 1.95-2.00; the number-average molecular weight of the polyether ester polyols is 800-5000, preferably 1000-3500, more preferably 1400-2500, and most preferably 1500-2300; Optionally, the viscosity of the polyether ester polyol at 90°C and a shear rate of $1S^{-1}$ can be less than 500 poise, and preferably less than 200 poise.

Optionally, the mass ratio of the polyether ester polyol in the diol raw materials is more than 2%, preferably more than 5%, and more preferably more than 10%.

Optionally, the mass ratio of the polyether ester polyol in the diol raw materials is less than 70%, and preferably less than 65%.

Optionally, the diol raw materials further include other diol compounds that can be used as the soft segment of spandex providing a second class of diol raw materials, such as polyether diols (e.g., polytetrahydrofuran ether diol, polyethylene glycol, polypropylene glycol), polyester diols (e.g., polybutylene adipate diol, copolyester diols of adipic acid and mixed diols such as ethylene glycol/1,4-butanediol, ethylene glycol/1,2-propanediol, and 1,6-hexanediol/2,2-dimethyl-1,3-propanediol), other polyether ester diols that can be used as the soft segment of spandex, or a mixture of at least two of the above diol compounds.

Preferably, the mass of the second class of diol raw materials accounts for 30%-95% of the total diol raw

materials. That is, in a preferred scheme, the polyether ester polyols and the second class of diol raw materials are blended to serve as the diol raw materials for spandex.

The preferred second diol class raw material is furan ether diol.

In another embodiment of the present invention, the diol raw materials include polyether ester polyols with an aromatic group-polyether block structure, and the polyether ester polyols comprise repeating units represented by Formula (1) and end-capped alcohol hydroxyl groups:

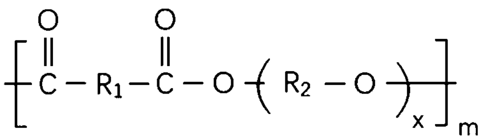
Formula (1)

Where $R_1$ is an aromatic group structure, and the mass content of $R_1$ in the repeating unit is 4.5%-44%; $R_2$ is at least one saturated alkyl group having 2-3 carbon atoms; x is 2-20, and preferably 3-10; the mass percentage of the repeating units in the polyether ester polyol represented by Formula (1) is more than 5%; the average functionality of the end-capped alcohol hydroxyl groups is 1.95-2.00; the number-average molecular weight of the polyether ester polyols is 800-5000, preferably 1000-3500, more preferably 1400-2500, and most preferably 1500-2300.

The polyether ester polyols may contain other polyester structures or polyether structures, or there may be aliphatic structures present acting as modified structures.

Similarly, the above-mentioned polyether ester polyols and the second class of diol raw materials can be blended to serve as the diol raw materials for spandex.

Beneficial Effects:

The method for preparing polyether ester polyols provided by the present invention uses polyesters as raw materials, enabling direct processing of recycled polyesters into polyether ester polyols suitable for spandex production. This simplifies the spandex polyether ester polyols production process, utilizes recycled resources, and expands the source of raw materials for polyurethane elastic fibers.

At the same time, the easily dyeable spandex provided by the present invention incorporates polyether ester polyols with a specific structure into the diol raw materials, resulting in spandex fibers whose molecular soft segments contain specific aromatic group-polyether block structures- which can be spun to yield easily dyeable spandex. Compared with conventional spandex, the easily dyeable spandex of the present invention has increased spandex disperse dye and acid dye uptake rate and fixation capacity without sacrificing the mechanical properties of the spandex.

By adjusting the mass ratio of the above-mentioned aromatic group-polyether block structures in the molecular soft segment of spandex, the spandex exhibits excellent alkali resistance while ensuring an acceptable dye uptake rate and fixation rate.

## Specific Embodiments

For the recycling of polyester materials, the most common methods currently include melt pelletization recycling, or chemical decomposition into terephthalic acid (PTA) or dimethyl terephthalate (DMT) for reuse as chemical raw materials. The present invention discloses a method for preparing polyether ester polyols using polyester as the raw material; the prepared polyether ester polyols can serve as the soft segment raw material for spandex. Through the method of the present invention, polyester can be directly used as a raw material for polyurethane elastic fibers, which not only expands the application of recycled polyester but also broadens the source of raw materials for spandex.

Specifically, the present invention provides a method for preparing polyether ester polyols and the polyether ester polyols prepared by this method. The polyether ester polyols comprise the structures represented by the following Formula (1) and Formula (2), and end-capped alcohol hydroxyl groups:

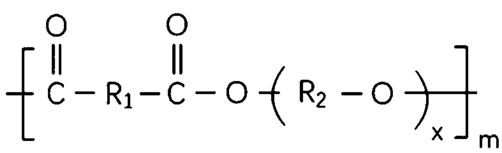
Formula (1)

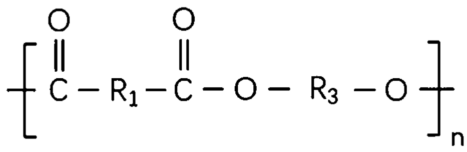

Formula (2)

Where $R_1$ is an aromatic group structure, and the mass content of $R_1$ in the repeating unit of Formula (1) is 4.5%-44%; $R_2$ is at least one saturated alkyl group having 2-5 carbon atoms; x is 2-20; $R_3$ is the residue of the polyol in the polyester raw material;

The mass ratio of Formula (2) in the structure of the polyether ester polyol is less than 20%, preferably less than 10%, and more preferably 0;

The number-average molecular weight of the polyether ester polyol is 1000-5000;

The average functionality of the end-capped alcohol hydroxyl groups is 1.95-2.00.

Hereinafter, unless otherwise specified, "polyether ester polyols" specifically refers to those with the above characteristics.

The aromatic group structures in the present invention include aromatic rings and heterocyclic aromatic rings: the aromatic rings may be at least one of benzene rings, naphthalene rings, anthracene rings, phenanthrene rings, and other aromatic rings; the heterocyclic aromatic rings may be at least one of pyridine rings, furan rings, thiazole rings, pyrimidine rings, and the like. If the content of the aromatic group $R_1$ in the polyether ester polyol is too high, the resulting polyether ester polyol will have excessively high rigidity, which in turn leads to excessively high viscosity and hinders the production process of polyurethane elastic fibers. Therefore, the mass content of $R_1$ in the repeating unit of Formula (1) is limited to 4.5%-44%.

The structure of Formula (2) is the residual structure of unreacted polyester in the method of the present invention. Since the reaction of the present invention cannot be 100% complete in practice, a portion of the group structure of the polyester raw material will remain, so the finally prepared polyether ester polyol may contain a portion of the structural units of Formula (2) mentioned above. However, through the control of reaction conditions, the transesterification reaction can be made as complete as possible. The structure of Formula (2) will significantly increase the melting point of the polyether ester polyol and also enhances the intermolecular forces of the polyether ester diol, leading to excessively high viscosity of the prepolymer during prepolymerization and making the prepolymerization reaction impossible to complete. In addition, the aromatic dibasic acid polyol ester structure will also affect the elastic recovery of the final polyurethane, resulting in a lower elastic recovery rate and increased permanent deformation. Therefore, in the present invention, the mass ratio of Formula (2) in the structure of the polyether ester polyol is less than 20%, preferably less than 10%, and more preferably 0.

According to the present invention, the average functionality of the end-capped alcohol hydroxyl groups of the polyether ester polyol is 1.95-2.00, preferably 1.96-2.00, and more preferably 1.98-2.00. This ensures that end capping of the polyether ester polyol with isocyanate can occur effectively, and hence chain extension by small-molecule amines or alcohols. If the average functionality is greater than 2.00, using the polyether ester polyol as a raw material for preparing polyurethane may lead to cross-linked structures in the resulting polyurethane, preventing the formation of chain-like polyurethane; such polyurethane will generate gels during continuous production, hindering the continuity of the spandex production process. If the average functionality is too low, the molecular weight of the resulting polyurethane will also be relatively low, thereby affecting the performance of the polyurethane elastic fiber. In the actual reaction, dehydration of the terminal hydroxyl groups of the polyether diol can result in double bonds forming during condensation polymerization/ring-opening polymerization, furthermore, due to the limitations of the effectiveness of the actual reaction process, the condensation reaction or transesterification reaction of the polyether diol by which polyether ester polyol is formed cannot be 100% complete, so the average functionality of the final polyether ester polyol typically cannot reach 2.00.

To be clear, "average functionality" refers to the average number of moles of alcohol hydroxyl groups per mole of polyether ester polyol that can participate in a reaction. In the present invention, taking into consideration the formation of double bonds from dehydration of polyether diol terminal hydroxyl groups and the presence of unreacted carboxyl groups, the average functionality of the alcohol hydroxyl groups can be calculated by the following formula:

Functionality = 2 × molar amount of alcohol hydroxyl groups / (molar amount of alcohol hydroxyl groups + molar amount of carboxyl groups + molar amount of double bonds)

The melting point of the polyether ester polyol of the present invention can be lower than 80°C, and it is preferably in a liquid state at room temperature. This prevents it from solidifying during storage or transportation, allowing industrialized continuous operation. If this were not the case, heating would be necessary to melt it, increasing energy consumption.

The inventors found that polyether ester polyols with the above characteristics were capable of replacing polytetrahydrofuran ether diol as the soft segment raw material for spandex, while the prepared spandex had a high elastic recovery rate. On this basis, the inventors propose a method for preparing the above-mentioned polyether ester polyols, which compared with the conventional method of reacting dicarboxylic acids with polyether diols, allows the use of recycled polyester as the raw material to prepare the polyether ester polyols, which expands the methods of using recycled polyester, and broadens the source of raw materials for spandex, which is more in line with environmental concepts.

The specific preparation method of the polyether ester polyols proposed by the present invention includes the following steps:

Step 1) Adding polyether diols and polyesters as raw materials to a reaction kettle, wherein the polyesters contain an aromatic dibasic acid polyol ester structure; the polyether diols have a degree of polymerization of 2-20, and preferably 3-10, and a molecular weight of 100-1000, and the molar ratio of aromatic groups in the polyether diol to those in the polyester is greater than 1.05:1;

Step 2) Heating the reaction kettle to the reaction temperature to carry out a transesterification reaction, and distilling off the small-molecule polyols produced in the transesterification reaction by means of vacuum distillation to prepare the polyether ester polyols, wherein the reaction temperature is higher than the boiling point of the small-molecule polyols and lower than the boiling point of the polyether diols.

In the method of the present invention, a transesterification reaction is carried out using polyesters with aromatic group structures and specific polyether diols as raw materials to prepare polyether ester polyols that meet the above-mentioned characteristics. The target molecular structure of the polyether ester polyols prepared by the present invention is an aromatic group-polyether structure connected by ester bonds; therefore, the above method selects polyesters containing aromatic group structures as raw materials to introduce the aromatic group structures in the polyesters into the molecular structure of the polyether ester polyols. Specifically, the polyesters containing aromatic group structures can be any common polyester material produced by copolymerization of aromatic groups and small-molecule polyols, the structures of which contain aromatic acid esters such as polyethylene terephthalate (PET), polytrimethylene terephthalate (PTT), polybutylene terephthalate (PBT), poly (butylene adipate-co-terephthalate) (PBAT); or polyesters containing aromatic heterocyclic acid ester structures, such as polyethylene 2,5-furandicarboxylate (PEF). All the above-mentioned polyesters can be obtained from recycled polyester plastic bottles, polyester fibers, or polyester films and the like. Compared with rigid aromatic group structures, the polyether segments in the polyether ester polyols of the present invention provide elasticity to the molecules. To ensure the finally prepared spandex has sufficient elastic recovery ability, the polyether segments should possess a certain length. If the length of the polyether segments is too short, the viscosity of the polyether ester polyols will be too high, which is not conducive to continuous large-scale spandex production processes, and will lead to poor spandex elastic recovery performance; if the length of the polyether segments is too long, the elastic modulus of spandex will be too low. Therefore, in the present invention, the molecular weight of the polyether diols used as raw materials for polyether segments provides a preferred degree of polymerization of 2-20, and more preferably 3-10, and the polyether diols have a molecular weight of 100-1000, preferably 300-1000, and more preferably 600-900. Specifically, the polyether diols can be synthesized by epoxy monomer ring-opening polymerization or by small-molecule diol polycondensation; they can be homopolymers synthesized from a single monomer, or copolymers synthesized from two or more monomers. For example, the polyether diols suitable for the present invention can be one or more of diethylene glycol (DEG), triethylene glycol (TEG), polyethylene glycol (PEG), poly-1,3-propanediol (P3OG), polypropylene glycol (PPG), polytetrahydrofuran (PTG), or copolymer diols obtained by the reaction of tetrahydrofuran with monomers such as ethylene oxide, propylene oxide, 2-methyltetrahydrofuran or 3-methyltetrahydrofuran.

The number-average molecular weight of the polyether ester polyols of the present invention should be 1000-5000, preferably 1000-3500, more preferably 1400-2500, and most preferably 1500-2300. The larger the number-average molecular weight of the polyether ester polyol, the higher its viscosity, making continuous operation on an industrial scale difficult. However, if the molecular weight of the polyether ester polyols is too small, when the molecular weight requirement of the polyurethane prepolymer is the same, more diisocyanates are needed to participate in synthesis, resulting in a higher content of urethane groups in the prepolymer, thus enhancing the interaction between prepolymer molecules and increasing the viscosity. Moreover, the length of the soft segments in the resulting polyurethane will be less, affecting the recovery performance of the final polyurethane fibers. In a preferred embodiment, the viscosity of the polyether ester polyols of the present invention at 90°C and a shear rate of $1S^1$ can be less than 500 poise, and preferably less than 200 poise.

Since the method provided by the present invention prepares polyether ester polyols by carrying out transesterification reaction between polyesters containing aromatic groups and polyether diols, the molecular weight of the polyether ester polyols can be adjusted by adjusting the molar ratio R of aromatic groups in the polyether diol to those in the polyester, in the following content, the molar ratio R refers to the molar ratio of aromatic groups in the polyether diols to those in the polyesters. The higher the above-mentioned molar ratio R, the higher the proportion of polyether diols in the raw materials, as such, the more the number of terminal hydroxyl groups there will be remaining after the small-molecule polyol residues in the polyester polymer are replaced by polyether diols, and the smaller the number-average molecular weight of the prepared polyether ester polyols; conversely, the lower the proportion of polyether diols in the raw materials is, the higher the number-average molecular weight of the prepared polyether ester polyols will be. To adjust the molecular weight of the polyether ester polyols, the mole number of the polyether diols should be greater than the mole number of the aromatic group structures in the polyesters. Theoretically, when the transesterification reaction is complete, the polyether diols will replace all small-molecule polyol residues in the polyesters, and the excess polyether diols will cleave the macromolecular polyester chains to form polyether ester polyols with relatively small molecular weights. Therefore, the difference between the mole number of the polyether diols and the mole number of the aromatic group structures in the polyesters is the mole number of the polyether ester polyols finally obtained. Based on the above analysis, the calculation method for the theoretically expected molecular weight of the finally prepared polyether ester polyols is as follows:

$$\frac{Mass\ of\ polyether\ diols\ charged\ +\ Mass\ of\ polyesters\ charged\ -\ Mass\ of\ small-molecule\ polyols\ produced\ in\ transesterification\ reaction}{Number\ of\ moles\ of\ polyether\ diols\ charged\ -\ Number\ of\ moles\ of\ aromatic\ group\ structures\ in\ the\ polyesters}$$

Formula (3)

The specific molar ratio R of the aromatic groups in the polyether diol to those in the polyesters can be derived by reversing the above formula, as follows:
Let the molecular weight of the finally obtained polyether ester polyol be W, let the molecular weight of the polyether diol be A, and let the mole number of polyether diol charged be M; then the mass of the polyether diol charged is M*A; assuming the polyester is obtained by the reaction of an aromatic dibasic acid with a molecular weight P and a small-molecule polyol with a molecular weight Q, then the molecular weight of the polyester repeating unit is (P+Q-36), the mole number of the aromatic group structure in the polyester charged is M/R, and the mass of the polyester charged is (P+Q-36) x M/R; substituting the above letters into Formula (1), the following formula is obtained:

$$W = \frac{MA+(P+Q-36)\cdot M/R}{M-M/R}$$ Formula (4)

Simplifying Formula (4) above, a formula representing the relationship between the molecular weight W and the charged molar ratio R of the polyether ester polyol is obtained as follows:

$$W = \frac{RA+P-36}{R-1}$$ Formula (5)

By applying Formula (5), when it is necessary to prepare a polyether ester polyol with a specific molecular weight, the charged molar ratio R can be calculated by the following formula:

$$R = \frac{W+P-36}{W-A}$$ Formula (6)

As can be seen from Formula (6), apart from the molar ratio R, in the preparation of a polyether ester polyol with a molecular weight W of 1000-5000, the molecular weight P of the aromatic dibasic acid and the molecular weight A of the polyether diol are also relevant. What is certain is that the mole number of the polyether diol in Step (1) should be greater than the mole number of the aromatic groups in the polyester; therefore, in the present invention, the molar ratio of aromatic groups in the polyether diols to those in the polyesters is greater than 1.05:1, and preferably greater than 1.1:1.

In Step (2), the temperature of the transesterification reaction should be controlled above the boiling point of the small-molecule polyols and below the boiling point of the polyether diols; in this manner removal of the exchanged small-molecule polyols by distillation as far as is possible promotes completion of the transesterification process.

During the transesterification reaction, a catalyst is preferably added to promote the reaction process. In the

present invention, the catalyst is selected from one or more of titanium, vanadium, tin, antimony, zirconium, bismuth and rare earth catalysts; preferably, it is selected from one or more of tetrapropyl titanate, tetrabutyl titanate, dibutyltin dilaurate, stannous octoate and bismuth laurate.

The present invention also provides a method for preparing polyurethane products such as polyurethane elastic fibers, non-woven fabrics, films or elastomers using the above-mentioned polyether ester polyols or the polyether ester polyols prepared by the above-mentioned method as a raw material. The polyurethane can be prepared by either a two-step method involving prepolymer synthesis or a one-pot method with all the materials charged together.

Whereby, the two-step polyurethane preparation method includes the following steps: (1) reacting the polyether ester polyol with a diisocyanate to form a prepolymer; and (2) polymerizing the prepolymer with a chain extender and a chain terminator. The one-pot method for preparing polyurethane includes the following steps: (1) charging the polyether ester polyol, diisocyanate and small-molecule polyol chain extender separately, that is, adding each material to the reaction vessel separately; (2) mixing the polyether ester polyol, diisocyanate and small-molecule polyol chain extender in the reaction vessel, and heating the mixture to react it, or heating it during the mixing process to react it. Whereby, the diisocyanate can be one or more selected from diphenylmethane diisocyanate, toluene diisocyanate, isophorone diisocyanate, hexamethylene diisocyanate, dicyclohexylmethane diisocyanate, and their isomers. The chain extender can be an amine-based or alcohol-based chain extender. Whereby, the amine-based chain extender can be diamines with 2-30 carbon atoms, for example, selected from one or more of ethylenediamine, propylenediamine, propylenediamine, pentylenediamine, methylpentylenediamine, methylpropylenediamine, hexamethylenediamine, triethylenediamine, xylylenediamine, phenylenediamine, diaminocyclohexane, hexamethylenediamine, and dopamine; alcohol-based chain extenders can be one or more of common chain extenders such as ethylene glycol, 1,4-butanediol, diethylene glycol, 1,6-hexanediol, 1,3-propanediol, and 1,4-dimethylolcyclohexane. The chain terminator can be monoamines with a carbon count of 2-20, which can be selected from one or more of ethylamine, isopropylamine, n-butylamine, tert-butylamine, hexylamine, dimethylamine, diethylamine, dipropylamine, di-n-butylamine, di-tert-butylamine, diisobutylamine, diisopropylamine, cyclohexylamine, or ethanolamine.

Unless otherwise specified in this specification, the corresponding operating conditions of the prior art using polyether diols for preparing polyurethane products, such as polyurethane elastic fibers, non-woven fabrics, films and elastomers, such as apply to solution processing or melt processing methods, can all be applied to the present invention. For example, polyurethane elastic fibers can be prepared by dry spinning of polyurethane solutions using the methods and equipment described in Patent Document CN1147628C, or melt spinning of polyurethane chips using the melt spinning method described in Patent Document CN1180137C; non-woven fabrics can be processed by methods such as melt blowing or solution electrospinning (specifically, the melt-blown non-woven fabric manufacturing method described in Patent Document CN101400838A and non-woven fabrics prepared by the solution electrospinning method described in Patent Document JP2009108422A); polyurethane films can be processed by methods such as solution coating, dip coating, melt extrusion, film blowing, or casting (specifically, the coating method described in Patent Document JP2005205787A, the dip coating method described in Patent Document WO2015064776A1, the extrusion method described in Patent Document GB1137520A, the film blowing method described in Patent Document DE2239478A1, and the casting method described in Patent Document JP2004203933A); elastomers can be processed by methods such as extrusion, injection molding, or film casting (specifically, the extrusion method described in Patent Document JP1996027376A, the injection molding method described in Patent Document US3917792A, and the film casting method described in Patent Document CA1251294A). The production methods of the polyurethane products described in the above patent documents are all incorporated into the present invention. The preparation methods of the above-mentioned polyurethane elastic fibers, non-woven fabrics, films and elastomers are only given as examples. The polyether ester polyols of the present invention can also be used as a diol raw material to produce polyurethane products by any existing technology or means other than in the manners mentioned above.

Furthermore, the present invention provides an easily dyeable spandex prepared using the above-mentioned polyether ester polyols and a preparation method thereof, and the easily dyeable spandex exhibits a good dye uptake rate and fixation capacity for disperse dyes and acid dyes. The soft segment in the molecular structure of the easily dyeable spandex comprises repeating units represented by the following formula:

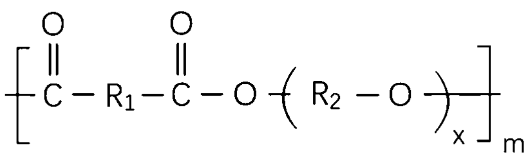

Formula (1)

Where $R_1$ is an aromatic group structure, and the mass content of $R_1$ in the repeating unit is 4.5%-44%; $R_2$ is at least one saturated alkyl group having 2-3 carbon atoms; x is 2-20;

The mass of the repeating units shown in Formula (1) accounts for more than 5% of the mass of the soft segment, and preferably more than 10%.

Optionally, the soft segment in the molecular structure of the spandex further comprises a polytetramethylene ether segment.

Dyeing with disperse dyes and acid dyes all take place in an aqueous dye molecule solution containing the dye molecules, and the dye molecules are completely dissolved in the water. Ordinary spandex yarns use polytetrahydrofuran as the diol raw material, resulting in hydrophobic polyurethane urea polymers. The molecular structure of the easily dyeable spandex provided by the present invention includes the aforementioned Formula (1) structure, where $(R_2\text{-}O)_x$ increases the hydrophilicity of the molecular chain. This structure is introduced into the spandex molecular structure using polyether ester polyols prepared from PEG and P3OG (polyethylene glycol and poly-1,3-propanediol, especially polyethylene glycol) and aromatic dibasic acids. Compared with polytetrahydrofuran, the above structure has a higher density of ether oxygen bonds, and polyurethane urea polymers prepared using this polyether ester polyol exhibit stronger hydrophilicity, making the spandex more easily swollen by dye solutions during acid dyeing and disperse dyeing, increasing the gaps between molecules and allowing dye molecules to more easily enter the interior of spandex filaments. In addition, since most acid dye molecules and disperse dye molecules are macromolecules containing aromatic rings, there is a stronger Van der Waals force between the aromatic ring structure introduced by the polyether ester polyol and the dye molecules. This results in stronger interaction between the dye molecules entering the spandex interior and the polyether ester polyol, making it more easily fixed within the spandex molecules, thus dyeing with disperse dyes and acid dyes yields a higher dye uptake rate and fixation rate.

At the same time as meeting the requirements for dye uptake rate and fixation rate, the introduction of the structure in Formula (1) should affect the mechanical properties of spandex as little as possible. In view of this, the present invention imposes more specific requirements on the structure of Formula (1) as are described above.

Taking into consideration the spandex dye uptake rate and fixation rate, $R_2$ in the Formula (1) repeating unit contained in the soft segment of the easily dyeable spandex molecular structure is preferably a straight-chain saturated alkyl group with 2-3 carbon atoms. For easily dyeable spandex, fewer carbon atoms in $R_2$ result in higher ether oxygen bond density, enhancing water absorption of the spandex, facilitating dye molecule penetration into the spandex fibers, and improving the dye uptake rate. Branched molecular structures adversely affect water absorption; therefore, $R_2$ in the present invention is preferably a straight-chain saturated alkyl group. Specifically, $(R_2\text{-}O)_x$ can be the polyether segment of PEG, it can also be the polyether segment of P3OG, or a copolymer ether of ethylene glycol and 1,3-propanediol, with the straight-chain saturated alkyl group containing 2 carbon atoms being most preferred.

In the molecular structure of the easily dyeable spandex of the present invention, the structure represented by Formula (1) must contribute a certain proportion in the soft segment to improve the spandex dye uptake rate and fixation rate. In the present invention, the mass proportion of the structure represented by Formula (1) in the soft segment should be more than 2%, preferably more than 5%, preferably more than 10%, more preferably more than 30%, and most preferably more than 50%.

The polyether ester structure represented by Formula (1) has little impact on the mechanical properties of spandex, so its mass proportion in the soft segment can be appropriately increased. However, due to the presence of ester groups in this structure, the alkali resistance of the spandex containing this structure is inferior to that of spandex prepared from polytetrahydrofuran ether diol, and there may be a loss of mechanical properties during the dyeing and finishing process. Therefore, the mass proportion of the polyether ester structure represented by Formula (1) in the spandex soft segment should not be too high, being preferably less than 80%, more preferably less than 70%, and even more preferably less than 65%. Specifically, spandex prepared from polyether ester polyols and spandex prepared from polyether polyols can be blended in the form of raw materials, prepolymers, or polymers to improve the alkali resistance of the spandex prepared from polyether ester polyols.

The present invention also provides a method for preparing the aforementioned easily dyeable spandex. The easily dyeable spandex can be prepared by dry spinning or melt spinning, wherein dry spinning includes the following steps:

Step 1): End-capping diol raw materials with diisocyanate raw materials to prepare a prepolymer;
Step 2): Dissolving the prepolymer with a polar solvent to obtain a prepolymer solution;
Step 3): Carrying out chain extension on the prepolymer using a mixed solution of a chain extender and a terminator to obtain a polyurethane/polyurethane urea solution;
Step 4): The addition of additives to prepare a spinning dope;
Step 5): Preparing the easily dyeable spandex by passing the prepared spinning dope through spinning equipment.

Compared with conventional dry spinning of spandex, the main improvement in the scheme of the present invention lies in the change to the diol raw materials.

In one embodiment of the present invention, the diol raw materials include polyether ester polyols with an aromatic group-polyether block structure, and the polyether ester polyols comprise repeating units represented by Formula (1) and end-capped alcohol hydroxyl groups:

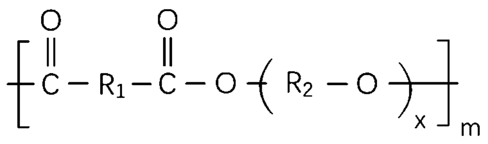

Formula (1)

Where $R_1$ is at least one of aromatic rings and heterocyclic aromatic rings, and the mass content of $R_1$ in the repeating unit is 4.5%-44%; $R_2$ is at least one straight-chain saturated alkyl group with 2-3 carbon atoms; x is 2-20, and preferably 3-10; the average functionality of the end-capped alcohol hydroxyl groups is 1.95-2.00; the number-average molecular weight of the polyether ester polyols is 800-5000, preferably 1000-3500, more preferably 1400-2500, and most preferably 1500-2300;

Optionally, the viscosity of the polyether ester polyol at 90°C and a shear rate of $1S^{-1}$ can be less than 500 poise, and preferably less than 200 poise.

In addition to the preparation method described earlier in the present invention, the polyether ester polyols can also be prepared by condensation reaction or transesterification of aromatic dibasic acids, their esters, or their anhydrides with polyether diols. In one embodiment, the aromatic dibasic acid esterified product can be obtained by reacting it with a monohydric alcohol with a boiling point lower than 150°C, such as small-molecule alcohols like methanol, ethanol, n-butanol, and n-hexanol, and these can be easily removed by distillation in subsequent esterification or transesterification reactions; the small-molecule alcohol is preferably methanol or ethanol. Moreover, compared with aromatic dibasic acids, the transesterification reaction between the above-mentioned esters and polyether diols can be carried out under milder reaction conditions, which is beneficial in terms of production process design.

To ensure that dye molecules can more easily enter the interior of the spandex yarn, the polyether diols are preferably at least one straight-chain saturated alkyl group with a carbon count of 2-3. The high-density ether oxygen bonds provide the polyether segments with stronger hydrophilicity, so that during acid dyeing and disperse dyeing, the spandex is more easily swollen by the dye solution, the gaps between molecules become larger, and dye molecules can more easily enter the interior of the spandex yarn. Specifically, the polyether diols can be polyethylene glycol (PEG), poly-1,3-propanediol (P3OG), or copolymer ether diols of ethylene glycol and 1,3-propanediol; preferably, the polyether diol is polyethylene glycol (PEG), which has a higher density of ether oxygen bonds providing the spandex with better hydrophilicity, thereby facilitating the entry of dye molecules into the interior of the spandex yarn.

The aromatic dibasic acid can be selected from one or more of terephthalic acid, isophthalic acid, phthalic acid, biphenyldicarboxylic acid, 1,4-naphthalenedicarboxylic acid, 2,6-naphthalenedicarboxylic acid, 2,3-naphthalenedicarboxylic acid, 2,5-furandicarboxylic acid, terephthalic diacetic acid, isophthalic diacetic acid and phthalic diacetic acid. In addition, since most acid dye molecules and disperse dye molecules are macromolecules containing aromatic rings, there is a stronger Van der Waals force between the aromatic ring structure introduced by the polyether ester polyol and the dye molecules, enabling the dye molecules entering the spandex to have stronger interactions with the polyether ester segments and be more easily fixed within the spandex molecules. Therefore, under the combined action of the polyether segments and aromatic ring structures, spandex with polyether-aromatic ring structures exhibits better dye uptake rates and fixation rates compared to conventional spandex.

By using the polyether ester polyols containing aromatic group-polyether block structures as raw materials for the soft segments of spandex, the structure represented by Formula (1) can be introduced into the molecular structure of the spandex.

In the aforementioned polyether ester polyols, due to the presence of ester groups, using such polyether ester polyols exclusively as diol raw materials for spandex results in spandex with inferior alkali resistance compared to polyether-based spandex. Therefore, it is necessary to limit the mass ratio of the aromatic group-polyether block structures in the soft segments of the spandex; specifically, the method of controlling the mass ratio is blending of spandex prepared from polyether ester polyols and spandex prepared from polyether polyols in the form of diol raw materials, prepolymers, or polymers to improve the alkali resistance of the spandex prepared from polyether ester polyols.

Taking the blending of diol raw materials for spandex as an example, to ensure the spandex has better dye uptake and fixation rates, the mass ratio of the polyether ester polyols in the diol raw materials should be more than 2%, preferably more than 5%, preferably more than 10%, more preferably more than 20%, more preferably more than 30%, more preferably more than 40%, and most preferably more than 50%.

To ensure the alkali resistance of the prepared spandex, the mass ratio of the polyether ester polyol in the diol raw materials should be less than 80%, preferably less than 70%, and more preferably less than 65%.

Optionally, in addition to the aforementioned polyether ester polyols, the diol raw materials further include other

diol compounds that can be used as the soft segment of spandex providing a second class of diol raw materials. Examples include polyether diols such as polytetrahydrofuran ether diol, polyethylene glycol, and polypropylene glycol, polyester diols such as polybutylene adipate diol and copolyester diols of adipic acid and mixed diols (e.g., ethylene glycol/1,4-butanediol, ethylene glycol/1,2-propanediol, and 1,6-hexanediol/2,2-dimethylpropanediol-1,3), other polyether ester diols that can serve as soft segments of spandex, or mixtures of at least two of the aforementioned diol compounds. To ensure the alkali resistance of the spandex, polyether diols are preferred as the second class of diol raw materials, with polytetrahydrofuran ether diol being most preferred. The mass proportion of the second class of diol raw materials in all the diol raw materials is preferably 30%-98%, and preferably 35%-90%. That is, the preferred scheme involves blending the polyether ester polyols with the second class of diol raw materials to act as the diol raw materials for spandex.

The methods involving blending of prepolymers or polymers are similar to those described above and will not be repeated here.

To ensure the alkali resistance of the prepared spandex, in another embodiment of the present invention, the diol raw materials include polyether ester polyols with an aromatic group-polyether block structure, and the polyether ester polyols comprise repeating units represented by Formula (1) and end-capped alcohol hydroxyl groups:

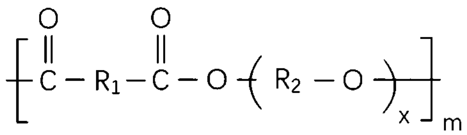
Formula (1)

Where $R_1$ is at least one of aromatic rings and heterocyclic aromatic rings, and the mass content of $R_1$ in the repeating unit is 4.5%-44%; $R_2$ is at least one straight-chain saturated alkyl group with 2-3 carbon atoms; x is 2-20, and preferably 3-10; the mass percentage of the repeating units represented by Formula (1) in the polyether ester polyols is more than 2%, preferably more than 5%, and preferably more than 10%; the average functionality of the end-capped alcohol hydroxyl groups is 1.95-2.00; and the number-average molecular weight of the polyether ester polyols is 800-5000, preferably 1000-3500, more preferably 1400-2500, and most preferably 1500-2300.

Unlike the previous embodiment, which involves blending polyether ester polyols with the second class of diol raw materials, this embodiment chooses to reduce the proportion of the cyclic structure within the polyether ester polyols in Formula (1). To balance the dyeing performance and alkali resistance of the spandex, in the preferred embodiment, the mass ratio of the cyclic structure within the polyether ester polyols in Formula (1) should be more than 5%, preferably more than 10%, more preferably more than 30%, and most preferably more than 50%. Meanwhile, it is preferably less than 80%, more preferably less than 70%, and more preferably less than 65%. The polyether ester polyols may contain other polyester structures or polyether structures, or there may be aliphatic structures present acting as modified structures. To ensure the mechanical properties of the spandex, polyether structures are preferred, with polytetramethylene ether structures being most preferred.

Similarly, as mentioned above, the aforementioned polyether ester polyols and the second class of diol raw materials can be blended to serve as the diol raw materials for spandex.

In the preparation method of the easily dyeable spandex according to the present invention, the diisocyanate raw material in Step 1) can be one or more of diphenylmethane diisocyanate, toluene diisocyanate, isophorone diisocyanate, hexamethylene diisocyanate, dicyclohexylmethane diisocyanate, and their isomers.

The polar solvent in Step 2) is at least one of N,N-dimethylformamide and N,N-dimethylacetamide.

The chain extender in Step 3) can be an amine-based or alcohol-based chain extender. Whereby, the amine-based chain extender can be diamines with 2-30 carbon atoms, for example, selected from one or more of ethylenediamine, propylenediamine, pentylenediamine, methylpentylenediamine, methylpropylenediamine, hexamethylenediamine, triethylenediamine, xylylenediamine, phenylenediamine, diaminocyclohexane, hexamethylenediamine, and dopamine; the alcohol-based chain extender can be one or more of common chain extenders such as ethylene glycol, 1,4-butanediol, diethylene glycol, 1,6-hexanediol, 1,3-propanediol, and 1,4-dimethylolcyclohexane. The chain terminator can be monoamines with a carbon count of 2-20, which can be selected from one or more of ethylamine, isopropylamine, n-butylamine, tert-butylamine, hexylamine, dimethylamine, diethylamine, dipropylamine, di-n-butylamine, di-tert-butylamine, diisobutylamine, diisopropylamine, cyclohexylamine, or ethanolamine.

The melt spinning process includes the following steps:

Step a) Adding diisocyanate raw materials, diol raw materials, and small-molecule polyol chain extenders to a reaction vessel respectively;

Step b) Mixing the materials in the reaction vessel, and heating the materials during or after mixing to carry out the reaction, and performing extrusion and pelletizing to prepare polyurethane pellets;

Step c) Drying the polyurethane pellets, adding additives, and then performing melt spinning.

The above-mentioned raw materials for preparing spandex by melt spinning, such as diisocyanates and diol raw materials, are similar to those for dry spinning, the difference being that only alcohol-based chain extenders are used as the chain extender in Step a).

**Embodiments**

The present invention is described in more detail through the following embodiments, the methods for testing the parameters mentioned are as follows:

1. Average functionality:

Functionality = 2 × molar amount of alcohol hydroxyl groups / (molar amount of alcohol hydroxyl groups + molar amount of carboxyl groups + molar amount of double bonds).

The acid value is measured by the method described in HG/T 2708-1995; the hydroxyl value is measured by the method described in HG/T 2709-1995; the unsaturation degree is measured by the method described in GB/T 12008.6-2010. The corresponding acid values, hydroxyl values, and degrees of unsaturation were converted into the molar amounts of the corresponding end groups of the polyether ester diol.

2. 300% tensile stress, breaking strength, and elongation at break: all were tested in accordance with "Test method for tensile properties of spandex yarn" in People's Republic of China Textile Industry Standard (FZ/T 50006-2013).

3. Plastic deformation test

One end of the prepared sample was clamped into the upper clamp, the other end was pre-tensioned to make the sample straighten axially, it was clamped into the lower clamp, and the instrument started.

The sample was stretched from 0% elongation (L0) to 300% elongation (L1) at a speed of 500 mm/min, then returned to 0% elongation, and the stretching-recovery cycle was performed four times. During the fifth stretching to 300% elongation, the force value F1 when stretched to 200% was recorded, followed by a delay of 30 seconds, then recovery to 0% elongation, and the force value F2 when recovering to 200% was recorded during this process. After another delay of 30 seconds, a sixth stretching is performed, and the length L2 of the sample at the pre-tension position was recorded.

$$\text{Plastic deformation rate calculation formula: } (L2-L0)/L0 \times 100\%$$

"5LP200%" represents the stress value when stretched to 200% elongation in the 5th cycle (i.e., F1), and "5UP200%" represents the rebound stress value when recovering from 300% elongation to 200% elongation in the 5th cycle (i.e., F2), which can be used to characterize the recovery modulus. "Plastic deformation rate" refers to the spandex yarn length increase ratio compared to the original length after 5 stretching cycles."5UP200%/5LP200%" represents the ratio of the recovery stress at 200% elongation to the tensile stress at 200% elongation in the 5th stretching cycle during the 5-cycle stretching test.

4. Dye uptake rate and fixation rate of acid dyes and after soaping:

In the present invention, acid red was used as the acid dye. The dye concentration in the dye bath before dyeing was measured as A, the dye concentration in the dye bath after dyeing as B, and the dye concentration in the soaping liquor after soaping as C. The results were calculated as follows:

$$\text{Acid dye uptake rate} = (A - B)/A$$

$$\text{Acid dye fixation rate after soaping} = (A - B - C)/A$$

5. Dye uptake rate and fixation rate of disperse dyes and after soaping:

In the present invention, disperse orange was used as the spinning dye. The dye concentration in the dye bath before dyeing was measured as P, the dye concentration in the dye bath after dyeing as Q, and the dye concentration in the

soaping liquor after soaping as M. The results were calculated as follows:

$$\text{Disperse dye uptake rate} = (P - Q)/P$$

$$\text{Disperse dye fixation rate after soaping} = (P - Q - M)/P$$

6. Spandex filament alkali resistance test:

The spandex filament was boiled in a 10 g/L potassium hydroxide solution at 100°C for 1 hour, and the mechanical properties before and after boiling in the alkali solution were tested.

Furthermore, the antioxidant mentioned in the following embodiments is Antioxidant 245, the dyeing agent is DH300R or 2462B, and the light stabilizer is Tinuvin 791, all of which are commercially available substances.

In the following examples, due to small-molecule polyols being distilled out as non-condensable gases during the reaction and the influence of volatilized small-molecule components in polyether diols, the actual alcohol-acid ratio involved in the reaction is lower than the theoretical value. Therefore, the molecular weight of the final product will be greater than the theoretical value, but the deviation is within an acceptable range.

Embodiments 1-6 below relate to the preparation of polyether ester polyols using polyethylene terephthalate (PET) as a raw material.

Embodiment 1: Preparation of polyether ester polyol with a molecular weight of 1200

First, polyethylene terephthalate was crushed. 2081.9g of crushed polyethylene terephthalate (PET) and 3000g of polyethylene glycol with a number-average molecular weight of 200 (PEG200) were added to the reaction kettle (i.e., the molar ratio was about 1.38). 3g of zinc acetate and 1.5g of $Sb_2O_3$ were added as catalysts. The temperature was gradually raised to 235°C to start the transesterification reaction, and maintained at 235°C until the reaction system became homogeneous. Vacuum distillation was used to distill out ethylene glycol from the reaction system until the amount of distilled ethylene glycol was close to the theoretical value, and 650g of ethylene glycol was distilled out from the reaction system. A polyether ester polyol with a molecular weight of 1200 was obtained. The viscosity of the polyether ester polyol at 40°C and $1S^{-1}$ was 100 Poise, the acid value was 0.3, and it was a light yellow liquid at room temperature.

Embodiment 2: Preparation of polyether ester polyol with a molecular weight of 2100

First, polyethylene terephthalate was crushed. 2428.9g of crushed polyethylene terephthalate (PET) and 3000g of polyethylene glycol with a number-average molecular weight of 200 (PEG200) were added to the reaction kettle (i.e., the molar ratio was about 1.19). 3g of magnesium acetate and 1.5g of $Sb_2O_3$ were added as catalysts. The temperature was gradually raised to 235°C to start the transesterification reaction, and maintained at 235°C until the reaction system became homogeneous. Vacuum distillation was used to distill out ethylene glycol from the reaction system until the amount of distilled ethylene glycol was close to the theoretical value, and 781.9g of ethylene glycol was distilled out from the reaction system. A polyether ester polyol with a molecular weight of 2100 was obtained. The viscosity of the polyether ester polyol at 40°C and $1S^{-1}$ was 210 Poise, the acid value was 0.3, and it was a light yellow liquid at room temperature.

Embodiment 3: Preparation of polyether ester polyol with a molecular weight of 3400

First, polyethylene terephthalate was crushed. 2602.4g of crushed polyethylene terephthalate (PET) and 3000g of polyethylene glycol with a number-average molecular weight of 200 (PEG200) were added to the reaction kettle (i.e., the molar ratio was about 1.11). 3g of zinc acetate and 1.5g of $Sb_2O_3$ were added as catalysts. The temperature was gradually raised to 235°C to start the transesterification reaction, and maintained at 235°C until the reaction system became homogeneous. Vacuum distillation was used to distill out ethylene glycol from the reaction system until the amount of distilled ethylene glycol was close to the theoretical value, and 842.3g of ethylene glycol was distilled out from the reaction system. A polyether ester polyol with a molecular weight of 3400 was obtained. The viscosity of the polyether ester polyol at 40°C and $1S^{-1}$ was 650 Poise, the acid value was 0.3, and it was a light yellow liquid at room temperature.

Embodiment 4: Preparation of polyether ester polyol with a molecular weight of 1500

First, polyethylene terephthalate was crushed. 1296.5g of crushed polyethylene terephthalate (PET) and 4203g of polyethylene glycol with a number-average molecular weight of 400 (PEG400) were added to the reaction kettle (i.e., the molar ratio was about 1.57). 3g of zinc acetate and 1.5g of $Sb_2O_3$ were added as catalysts. The temperature was gradually

raised to 245°C to start the transesterification reaction, and maintained at 245°C until the reaction system became homogeneous. Vacuum distillation was used to distill out ethylene glycol from the reaction system until the amount of distilled ethylene glycol was close to the theoretical value, and 418.6g of ethylene glycol was distilled out from the reaction system. A polyether ester polyol with a molecular weight of 1500 was obtained. The viscosity of the polyether ester polyol at 40°C and $1S^{-1}$ was 73.5 Poise, the acid value was 0.3, and it was a light yellow liquid at room temperature.

Embodiment 5: Preparation of polyether ester polyol with a molecular weight of 3450

First, polyethylene terephthalate was crushed. 1019.2g of crushed polyethylene terephthalate (PET) and 4480g of polyethylene glycol with a number-average molecular weight of 650 (PTG650) were added to the reaction kettle (i.e., the molar ratio was about 1.30). 3g of zinc acetate and 1.5g of $Sb_2O_3$ were added as catalysts. The temperature was gradually raised to 245°C to start the transesterification reaction, and maintained at 245°C until the reaction system became homogeneous. Vacuum distillation was used to distill out ethylene glycol from the reaction system until the amount of distilled ethylene glycol was close to the theoretical value, and 329g of ethylene glycol was distilled out from the reaction system. A polyether ester polyol with a molecular weight of 3450 was obtained. The viscosity of the polyether ester polyol at 40°C and $1S^{-1}$ was 35.2 Poise, the acid value was 0.3, and it was a light yellow liquid at room temperature.

Embodiment 6: Preparation of polyether ester polyol with a molecular weight of 3500

First, polyethylene terephthalate was crushed. 699g of crushed polyethylene terephthalate (PET) and 4800.2g of poly-1,3-propanediol with a number-average molecular weight of 1000 (P3OG1000) were added to the reaction kettle (i.e., the molar ratio was about 1.32). 3g of zinc acetate and 1.5g of $Sb_2O_3$ were added as catalysts. The temperature was gradually raised to 250°C to start the transesterification reaction, and maintained at 250°C until the reaction system became homogeneous. Vacuum distillation was used to distill out ethylene glycol from the reaction system until the amount of distilled ethylene glycol was close to the theoretical value, and 286g of ethylene glycol was distilled out from the reaction system. A polyether ester polyol with a molecular weight of 3500 was obtained. The viscosity of the polyether ester polyol at 40°C and $1S^{-1}$ was 28.5 Poise, the acid value was 0.3, and it was a light yellow liquid at room temperature.

Embodiment 7: Preparation of polyether ester polyol with a molecular weight of 3480

First, polybutylene terephthalate was crushed. 1137.14g of crushed polybutylene terephthalate (PBT) and 4362.85g of polytetrahydrofuran with a number-average molecular weight of 650 (PTG650) were added to the reaction kettle (i.e., the molar ratio was about 1.30). 3g of zinc acetate and 1.5g of $Sb_2O_3$ were added as catalysts. The temperature was gradually raised to 260°C to start the transesterification reaction, and maintained at 260°C until the reaction system became homogeneous. Vacuum distillation was used to distill out ethylene glycol from the reaction system until the amount of distilled ethylene glycol was close to the theoretical value, and 465g of butanediol was distilled out from the reaction system. A polyether ester polyol with a molecular weight of 3480 was obtained. The viscosity of the polyether ester polyol at 40°C and $1S^{-1}$ was 35.8 Poise, the acid value was 0.3, and it was a light yellow liquid at room temperature.

Embodiments 8-10 below relate to the use of polyether ester polyols for preparing polyurethane elastic fibers.

Embodiment 8: Use of the polyether ester polyol from Embodiment 1 for preparing polyurethane elastic fibers

100 kg of the polyether ester diol prepared in Embodiment 1 was added to a reaction kettle preheated to a constant temperature of 45°C, stirring was started at a speed of 150 rpm, and 31 kg of diphenylmethane diisocyanate was added. After stirring for 5 minutes, the temperature was increased to 90°C; the reaction took place at 90°C for 2 hours, yielding a prepolymer.

The prepolymer was cooled to 50°C, and the prepolymer dissolved using 166.72 kg of dimethylacetamide (DMAc), and then an amine solution with a mass concentration of 3.2% containing 2.40 kg of ethylenediamine and 0.29 kg of diethylamine was added, and the stirring speed was increased to 300 rpm to carry out the chain extension reaction. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-3 with a denier of 40D.

Embodiment 9: Use of the polyether ester polyol from Embodiment 6 for preparing polyurethane elastic fibers

100 kg of the polyether ester diol prepared in Embodiment 1 was added to a reaction kettle preheated to a constant temperature of 45°C, stirring was started at a speed of 150 rpm, and 16.15 kg of diphenylmethane diisocyanate

was added. After stirring for 5 minutes, the temperature was increased to 90°C; the reaction took place at 90°C for 2 hours, yielding a prepolymer.

The prepolymer was cooled to 50°C, and the prepolymer dissolved using 147.82 kg of dimethylacetamide (DMAc), and then an amine solution with a mass concentration of 3.2% containing 2.13 kg of ethylenediamine and 0.26 kg of diethylamine was added, and the stirring speed was increased to 300 rpm to carry out the chain extension reaction. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-4 with a denier of 40D.

Embodiment 10: Use of the polyether ester polyol from Embodiment 7 for preparing polyurethane elastic fibers

100 kg of the polyether ester diol prepared in Embodiment 1 was added to a reaction kettle preheated to a constant temperature of 45°C, stirring was started at a speed of 150 rpm, and 16.20 kg of diphenylmethane diisocyanate was added. After stirring for 5 minutes, the temperature was increased to 90°C; the reaction took place at 90°C for 2 hours, yielding a prepolymer.

The prepolymer was cooled to 50°C, and the prepolymer dissolved using 147.89 kg of dimethylacetamide (DMAc), and then an amine solution with a mass concentration of 3.2% containing 2.14 kg of ethylenediamine and 0.27 kg of diethylamine was added, and the stirring speed was increased to 300 rpm to carry out the chain extension reaction. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-5 with a denier of 40D.

Comparative Example 1: Use of polytetrahydrofuran (PTMG) with a number-average molecular weight of 2000 for preparing polyurethane elastic fibers

100 kg of polytetrahydrofuran PTMG2000 (with a number-average molecular weight of 2000) was added to a reaction kettle preheated to a constant temperature of 45°C, stirring was started at a speed of 150 rpm. 22.2 kg of diphenylmethane diisocyanate was added, and after stirring for 5 minutes, the temperature was increased to 90°C; the reaction took place at 90°C for 2 hours, yielding a prepolymer.

The prepolymer was cooled to 50°C, and the prepolymer dissolved using 155.5 kg of dimethylacetamide (DMAc), and then an amine solution with a concentration of 3.2% containing 2.26 kg of ethylenediamine and 0.28 kg of diethylamine was added, and the stirring speed was increased to 300 rpm to carry out the chain extension reaction. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-0 with a denier of 40D.

Comparative Example 2: Use of polyethylene glycol with a number-average molecular weight of 1500 for preparing polyurethane elastic fibers

100 kg of polyethylene glycol with a number-average molecular weight of 1500 was added to a reaction kettle preheated to a constant temperature of 45°C, stirring was started at a speed of 150 rpm. 26.5 kg of diphenylmethane diisocyanate was added, and after stirring for 5 minutes, the temperature was increased to 90°C; the reaction took place at 90°C for 2 hours, yielding a prepolymer.

The prepolymer was cooled to 50°C, and the prepolymer dissolved using 161 kg of dimethylacetamide (DMAc), and then an amine solution with a concentration of 3.2% containing 2.32 kg of ethylenediamine and 0.28 kg of diethylamine was added, and the stirring speed was increased to 300 rpm to carry out the chain extension reaction. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-1 with a denier of 40D.

Comparative Example 3: Use of polypropylene glycol with a number-average molecular weight of 2000 for preparing polyurethane elastic fibers

100 kg of polypropylene glycol with a number-average molecular weight of 2000 was added to a reaction kettle preheated to a constant temperature of 45°C, stirring was started at a speed of 150 rpm. 21.98 kg of diphenylmethane diisocyanate was added, and after stirring for 5 minutes, the temperature was increased to 90°C; the reaction took place at 90°C for 2 hours, yielding a prepolymer.

The prepolymer was cooled to 50°C, and the prepolymer dissolved using 155.24 kg of dimethylacetamide

(DMAc), and then an amine solution with a concentration of 3.2% containing 2.24 kg of ethylenediamine and 0.28 kg of diethylamine was added, and the stirring speed was increased to 300 rpm to carry out the chain extension reaction. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-2 with a denier of 40D.

Comparative Example 4: Preparation of polyether ester polyol with a molecular weight of 1200

First, polyethylene terephthalate was crushed. 2602.4g of crushed polyethylene terephthalate (PET) and 3000g of polyethylene glycol (PEG200) with a number-average molecular weight of 200 were added to a reaction kettle. 3g of zinc acetate and 1.5g of $Sb_2O_3$ were added as catalysts, and the temperature was gradually raised to 235°C to start the transesterification reaction. The temperature was maintained at 235°C until the reaction system became homogeneous, and vacuum distillation was used to distill out ethylene glycol from the reaction system, and 681g of ethylene glycol was distilled out from the reaction system. A polyether ester diol with a molecular weight of 1200 was obtained. This polyether ester diol was a solid at 40°C, with a melting point of 60°C and an acid value of 0.3; the molar proportion of its ethylene glycol ester structure was 20%.

Comparative Example 5: Use of the polyether ester polyol from Comparative Example 4 for preparing polyurethane elastic fibers

100 kg of the polyether ester polyol prepared in Comparative Example 4 was added to a reaction kettle preheated to a constant temperature of 90°C, stirring was started at a speed of 150 rpm, and 31 kg of diphenylmethane diisocyanate was added to commence the prepolymerization reaction. When the reaction had proceeded for 57 minutes, the viscosity of the prepolymer became too high, making it impossible to continue the prepolymerization reaction.

The following parameters of the polyurethane elastic fibers (i.e., spandex yarns) obtained in Embodiments 8, 9, and 10 and Comparative Examples 1, 2 and 3 were tested according to the above-mentioned test methods and the test results summarized in the following table.

| Spandex filament | Tensile stress at 300% elongation, cN | Breaking Strength, cN | Elongation at break, % | 5LP200%, cN | 5UP200%, cN | Plastic Deformation Rate, % | 5UP200%/ 5LP200% |
|---|---|---|---|---|---|---|---|
| PUU-0 | 12.08 | 45.31 | 550 | 1.88 | 1.22 | 31.35 | 64.4% |
| PUU-1 | 6.22 | 12.12 | 417 | 1.02 | 0.75 | 63.52 | 73.5% |
| PPU-2 | 8.9 | 25.2 | 703 | 0.91 | 0.72 | 30.1 | 79.1% |
| PUU-3 | 15.21 | 38.98 | 515 | 2.22 | 1.83 | 27.3 | 82.4% |
| PUU-4 | 9.24 | 40.37 | 682 | 1.60 | 1.26 | 23.1 | 78.8% |
| PUU-5 | 10.08 | 40.91 | 623 | 1.57 | 1.28 | 22.9 | 81.5% |

As can be seen from the data in the above table that, compared with the polyurethane elastic fibers prepared from polyethylene glycol as the raw material, the polyurethane elastic fibers prepared by using the polyether ester polyol of the present invention have significantly improved tensile stress and breaking strength, these being close to or even exceeding those of conventionally used polyurethane elastic fibers prepared from polytetrahydrofuran ether diols, thus meeting the performance requirements for spandex yarns used in garments. In addition, the plastic deformation rate of the polyurethane elastic fibers prepared with the polyether ester polyol of the present invention has decreased significantly. From the 5UP 200% values, it can be seen that the polyurethane elastic fibers using the polyether ester diols of the present invention have a higher 5UP 200% recovery stress, that is, a higher recovery modulus, which indicates greater resilience and can result in better fabric shape retention. In conclusion, the preparation method of the polyether ester polyol provided by the present invention allows the use of post-consumer polyester as the raw material to prepare a polyether ester polyol raw material for spandex, the performance of which is comparable to that of existing polytetrahydrofuran. The spandex prepared from this raw material has performance similar to that of spandex prepared from polytetrahydrofuran, with good mechanical properties and effectively improved wearability. Therefore, the polyether ester polyol prepared according to the method for preparing polyether ester polyol from polyester provided by the present invention can be used as a soft

segment raw material for spandex, which broadens the applications for recycled polyester materials and also expands the sources of raw materials for spandex.

The spinning dopes in Embodiments 8, 9, 10 and Comparative Examples 1, 2, 3 were diluted from having a solid content of 35% to having a solid content of 20%, and then polyurethane film gloves were prepared by dip-coating. Film sample strips PUU-F3, PUU-F4, PUU-F5 corresponding to the embodiments and film sample strips PUU-F0, PUU-F1, PUU-F2 corresponding to the comparative examples were obtained by cutting, the specific preparation steps of the film sample strips being as follows:
First, the hand mold was slowly immersed into the tank containing the diluted dope, then slowly lifted out of the dope tank. The hand mold was rotated slowly to ensure the dope had a uniform thickness on the surface of the hand mold, and then the hand mold was dried in an oven. After drying, the gloves were stripped off to obtain polyurethane film gloves with a wall thickness of about 150 microns. In order to test the mechanical properties of the glove film, the film on the palm part of the glove was cut into strips with a width of 6 mm and a length of 10 cm, and the mechanical properties tested.
The mechanical properties were as follows:

| Film strip | Tensile stress at 300% elongation, N | Breaking Strength, N | Elongation at break, % | 5LP200%, N | 5UP200%, N | Plastic Deformation Rate, % | 5UP200%/ 5LP200% |
|---|---|---|---|---|---|---|---|
| PUU-F0 | 2.23 | 15.56 | 1151 | 1.13 | 0.73 | 23.75 | 64.6% |
| PUU-F1 | 1.22 | 5.03 | 861 | 0.30 | 0.22 | 64.2 | 73.3% |
| PUU-F2 | 1.68 | 8.42 | 1379 | 0.41 | 0.32 | 32.5 | 78% |
| PUU-F3 | 2.80 | 14.12 | 1095 | 1.33 | 1.10 | 17.33 | 83.2% |
| PUU-F4 | 4.42 | 14.38 | 1350 | 0.96 | 0.78 | 16.28 | 81.8% |
| PUU-F5 | 1.22 | 14.52 | 1308 | 0.93 | 0.76 | 17.09 | 82.5% |

It can be seen from the data in the above table that for the film product gloves prepared by using the polyether ester polyol of the present invention, the tests performed on the film pieces cut from the palms show that compared with the thin-walled product film pieces prepared from polyethylene glycol and polypropylene glycol as raw materials, the tensile stress and breaking strength are significantly improved, and are close to or exceed the mechanical properties of the film products prepared from polytetrahydrofuran, and are capable of satisfying the mechanical property requirements of elastic film gloves, while exhibiting the characteristics expected in spandex filaments. Additionally, the polyurethane film gloves prepared from the polyether ester diol of the present invention exhibit low plastic deformation, resulting in the shape of the film glove product being more stable. In terms of the 5UP200% values, it can be seen that the polyurethane elastic fibers using the polyether ester diol of the present invention exhibit a higher 5UP200% recovery stress, which indicates greater resilience and can result in the gloves fitting better. Also, while maintaining the fit, the gloves can be made thinner, thereby reducing the raw material cost of the film gloves. The polyether ester polyol provided by the present invention effectively improves the mechanical properties of the film pieces when the polyether ester polyol is used as the soft segment of the polyurethane film fibers. On this basis, it also enables the thin-walled glove film products to have a lower plastic deformation rate and a higher recovery modulus, which is beneficial to the shape retention of the film glove products, improves the shape retention of the film glove products, and can reduce the raw material production cost.

Embodiment 11: Melt-spun spandex prepared from the polyether ester polyol of Embodiment 2

The polyether ester polyol of Embodiment 2, 1,4-butanediol, and diphenylmethane diisocyanate were respectively metered into a twin-screw extruder at a molar ratio of 1.2:2:3.2. A continuous polymerization reaction and extrusion were carried out at 195°C, followed by underwater pelletizing. After drying until the moisture content of the polyurethane pellets was lower than 100 ppm, necessary additives such as antioxidants and light stabilizers were added and subjected to melt spinning together, resulting in spandex TPU-1 with a denier of 20D.

Comparative Example 6: Preparation of melt-spun spandex from polytetrahydrofuran with a number-average molecular weight of 2000

Polytetrahydrofuran PTMG2000 (with a number-average molecular weight of 2000), 1,4-butanediol, and

diphenylmethane diisocyanate were respectively metered into a twin-screw extruder at a molar ratio of 1.2:2:3.2. A continuous polymerization reaction and extrusion were carried out at 190°C, followed by underwater pelletizing. After drying until the moisture content of the polyurethane pellets was lower than 100 ppm, necessary additives such as antioxidants and light stabilizers were added and they were subjected to melt spinning together, resulting in spandex TPU-0 with a denier of 20D.

Comparative Example 7: Preparation of melt-spun spandex from polyethylene glycol with a number-average molecular weight of 1500

Polyethylene glycol with a number-average molecular weight of 1500, 1,4-butanediol, and diphenylmethane diisocyanate were respectively metered into a twin-screw extruder at a molar ratio of 1.2:2:3.2. A continuous polymerization reaction and extrusion were carried out at 190°C, followed by underwater pelletizing. After drying until the moisture content of the polyurethane pellets was lower than 100 ppm, necessary additives such as antioxidants and light stabilizers were added and they were subjected to melt spinning together, resulting in spandex TPU-2 with a denier of 20D.

| Spandex filament | Tensile stress at 300% elongation, cN | Breaking Strength, cN | Elongation at break, % | 5LP200%, cN | 5UP200%, cN | Plastic Deformation Rate, % | 5UP200%/ 5LP200% |
|---|---|---|---|---|---|---|---|
| TPU-0 | 13.5 | 45 | 540 | 1. 775 | 1. 14 | 32. 8 | 64. 5% |
| TPU-1 | 17.5 | 43 | 485 | 2. 21 | 1. 77 | 28. 2 | 82. 4% |
| TPU-2 | 5. 8 | 11.5 | 416 | 0. 986 | 0. 712 | 38. 2 | 72. 3% |

From the comparison of mechanical properties of the above comparative examples and embodiments, it can be seen that the melt-spun spandex filaments processed in melt form using polyether ester as raw material have significantly higher tensile stress and recovery modulus than those processed in melt form using polytetrahydrofuran as the raw material, while exhibiting similar characteristics and advantages in terms of their mechanical properties to those of dry-spun spandex processed in solvent form.

In the following content, Embodiments 12-18 serve as dyeability tests for the dyeable spandex provided by the present invention.

Embodiment 12: Preparation of polyether ester polyol with a number-average molecular weight of 1500 from polyethylene glycol (with a number-average molecular weight of 600) and terephthalic acid

17 parts by weight of polyethylene glycol PEG600 (with a number-average molecular weight of 600) and 2.7 parts by weight of terephthalic acid were charged into a reaction kettle, and nitrogen gas was introduced to replace the air inside the reaction kettle. Stirring in the reaction kettle was started at a stirring speed of 150 rpm. A programmed temperature increase was applied to the system, raising the temperature to 150°C, and this maintained for 5 hours; the temperature was then increased further to 230°C and this temperature maintained until the water yield of the system reached more than 90% of the theoretical value, and the solution changed into a homogeneous phase. Tetraisopropyl titanate was added as a catalyst, and a vacuum of 2000 Pa gradually introduced. Once the acid value was lower than 0.5 mgKOH/g, a polyether ester polyol with a number-average molecular weight of 1500 was obtained. Tests showed that average functionality was 1.98, and the viscosity of the polyether ester polyol at 90°C and $1S^{-1}$ was 25 Poise, and it was a liquid at room temperature.

From the point of view of polyester recycling, the polyether ester polyol with a number-average molecular weight of 1500 in this embodiment can also be prepared by using PEG600 and crushed PET as raw materials, in a manner similar to that of Embodiments 1-6.

Embodiment 13: Preparation of polyurethane elastic fibers using the polyether ester polyol from Embodiment 12

100 kg of the polyether ester diol prepared in Embodiment 1 was added to a reaction kettle preheated to a constant temperature of 45°C, stirring was started at a speed of 150 rpm, and 31 kg of diphenylmethane diisocyanate was added. After stirring for 5 minutes, the temperature was increased to 90°C; the reaction took place at 90°C for 2 hours, yielding a prepolymer.

The prepolymer was cooled to 50°C, and the prepolymer dissolved using 166.72 kg of dimethylacetamide (DMAc), and then an amine solution with a mass concentration of 3.2% containing 2.40 kg of ethylenediamine and 0.29 kg

of diethylamine was added, and the stirring speed was increased to 300 rpm to carry out the chain extension reaction. After the chain extension reaction was complete, necessary additives such as antioxidants and dyeing aids were added, and the mixture was aged for 30 hours to obtain a spinning dope with a solid content of 35%. The above dope was dry-spun to obtain a polyurethane elastic fiber PUU-6 with a denier of 40D.

Embodiment 14: Preparation of polyurethane elastic fibers using the polyether ester polyol from Embodiment 12 and polytetrahydrofuran (PTMG) with a number-average molecular weight of 2000

50 kg of the polyether ester diol prepared in Embodiment 1 and 50 kg of polytetrahydrofuran with a number-average molecular weight of 2000 were added to a reaction kettle preheated to a constant temperature of 45°C, stirring was started at a speed of 150 rpm, and 21.88 kg of diphenylmethane diisocyanate was added. After stirring for 5 minutes, the temperature was increased to 90°C; the reaction took place at 90°C for 2 hours, yielding a prepolymer.

The prepolymer was cooled to 50°C, and the prepolymer dissolved using 161.3 kg of dimethylacetamide (DMAc), and then an amine solution with a mass concentration of 3.26% containing 2.38 kg of ethylenediamine and 0.29 kg of diethylamine was added, and the stirring speed was increased to 300 rpm to carry out the chain extension reaction. After the chain extension reaction was complete, necessary additives such as antioxidants and dyeing aids were added, (the amount of dyeing assistant 2462B added was 1%) and the mixture was aged for 30 hours to obtain a spinning dope with a solid content of 35%. The above dope was dry-spun to obtain a polyurethane elastic fiber PUU-7 with a denier of 40D.

Embodiment 15: Preparation of polyurethane elastic fibers using the prepolymers prepared from the polyether ester polyol of Embodiment 12 and polytetrahydrofuran (PTMG) with a number-average molecular weight of 2000

50 kg of the polyether ester diol prepared in Embodiment 1 was added to a reaction kettle preheated to a constant temperature of 45°C, stirring was started at a speed of 150 rpm, and 15.64 kg of diphenylmethane diisocyanate was added. After stirring for 5 minutes, the temperature was increased to 90°C; the reaction took place at 90°C for 2 hours, yielding Prepolymer 1.

50 kg of polytetrahydrofuran with a number-average molecular weight of 2000 was added to a reaction kettle preheated to a constant temperature of 45°C, stirring was started at a speed of 150 rpm, and 11.1 kg of diphenylmethane diisocyanate was added. After stirring for 5 minutes, the temperature was increased to 90°C; the reaction took place at 90°C for 2 hours, yielding Prepolymer 2.

Prepolymer 1 and Prepolymer 2 were cooled to 50°C and transferred into the same reaction kettle. 161.3 kg of dimethylacetamide (DMAc) was used to dissolve the prepolymers, and then an amine solution with a mass concentration of 3.26%, containing 2.38 kg of ethylenediamine and 0.29 kg of diethylamine, was added. The stirring speed was increased to 300 rpm for the chain extension reaction to take place. After the chain extension reaction was complete, necessary additives such as antioxidants and dyeing aids were added, (the amount of dyeing assistant 2462B added was 1%) and the mixture was aged for 30 hours to obtain a spinning dope with a solid content of 35%. The above dope was dry-spun to obtain a polyurethane elastic fiber PUU-8 with a denier of 40D.

Embodiment 16: Preparation of polyurethane fibers using a blended dope prepared by blending 100 kg of the dope from Embodiment 13 and 100 kg of the dope from Comparative Example 1

100 kg of the dope prepared in Embodiment 13 and 100 kg of the dope prepared in Comparative Example 1 were taken and mixed uniformly by means of stirring in a reaction kettle in combination with static mixing. The above blended dope was dry-spun to obtain a polyurethane elastic fiber PUU-9 with a denier of 40D.

Embodiment 17: Preparation of polyurethane elastic fibers using the polyether ester polyol from Embodiment 12 and polytetrahydrofuran (PTMG) with a number-average molecular weight of 2000

10 kg of the polyether ester diol prepared in Embodiment 12 and 90 kg of polytetrahydrofuran with a number-average molecular weight of 2000 were added to a reaction kettle preheated to a constant temperature of 45°C, stirring was started at a speed of 150 rpm, and 21.88 kg of diphenylmethane diisocyanate was added. After stirring for 5 minutes, the temperature was increased to 90°C; the reaction took place at 90°C for 2 hours, yielding a prepolymer.

The prepolymer was cooled to 50°C, and the prepolymer dissolved using 161.3 kg of dimethylacetamide (DMAc), and then an amine solution with a mass concentration of 3.26% containing 2.38 kg of ethylenediamine and 0.29 kg of diethylamine was added, and the stirring speed was increased to 300 rpm to carry out the chain extension reaction. After the chain extension reaction was complete, necessary additives such as antioxidants and dyeing aids were added, (the amount of dyeing assistant 2462B added was 1%) and the mixture was aged for 30 hours to obtain a spinning dope with a solid content of 35%. The above dope was dry-spun to obtain a polyurethane elastic fiber PUU-10 with a denier of 40D.

Embodiment 18: Preparation of polyurethane elastic fibers using the polyether ester polyol from Embodiment 12 and polytetrahydrofuran (PTMG) with a number-average molecular weight of 2000

65 kg of the polyether ester diol prepared in Embodiment 12 and 35 kg of polytetrahydrofuran with a number-average molecular weight of 2000 were added to a reaction kettle preheated to a constant temperature of 45°C, stirring was started at a speed of 150 rpm, and 21.88 kg of diphenylmethane diisocyanate was added. After stirring for 5 minutes, the temperature was increased to 90°C; the reaction took place at 90°C for 2 hours, yielding a prepolymer.

The prepolymer was cooled to 50°C, and the prepolymer dissolved using 161.3 kg of dimethylacetamide (DMAc), and then an amine solution with a mass concentration of 3.26% containing 2.38 kg of ethylenediamine and 0.29 kg of diethylamine was added, and the stirring speed was increased to 300 rpm to carry out the chain extension reaction. After the chain extension reaction was complete, necessary additives such as antioxidants and dyeing aids were added, (the amount of dyeing assistant 2462B added was 1%) and the mixture was aged for 30 hours to obtain a spinning dope with a solid content of 35%. The above dope was dry-spun to obtain a polyurethane elastic fiber PUU-11 with a denier of 40D.

The following parameters of the polyurethane elastic fibers (i.e., spandex yarns) obtained in Embodiments 12-18 and Comparative Example 1 were tested according to the above-mentioned test methods and the test results summarized in the following table.

| Spandex filament | Tensile stress at 300% elongation, cN | Tensile strength, cN | Elongation at break, % | 5LP200%, cN | 5UP200%, cN | Plastic Deformation Rate, % | 5UP200%/ 5LP200% |
|---|---|---|---|---|---|---|---|
| PUU-0 | 12.08 | 45.31 | 550 | 1. 88 | 1. 22 | 31. 35 | 64. 40% |
| PUU-6 | 15.21 | 38.98 | 515 | 2. 22 | 1. 83 | 27. 3 | 82. 40% |
| PUU-7 | 14. 19 | 43. 83 | 534 | 2. 13 | 1. 59 | 28. 74 | 75. 12% |
| PUU-8 | 13.92 | 42. 99 | 526 | 2. 09 | 1. 56 | 28. 86 | 74. 83% |
| PUU-9 | 13. 37 | 41. 30 | 522 | 2.01 | 1. 49 | 29.03 | 76.21% |
| PUU-10 | 13. 04 | 44. 39 | 546 | 1. 94 | 1. 29 | 31. 03 | 65. 83 |
| PUU-11 | 14. 18 | 40. 36 | 520 | 2. 10 | 1. 64 | 28. 16 | 76. 54% |

It can be seen from the above table that compared with conventional polyether-based spandex, the dyeable spandex filaments prepared by the method of the present invention show no significant decrease in mechanical properties.

The dyeing properties of the polyurethane elastic fibers (i.e., spandex filaments) obtained in Examples 12-18 and Comparative Example 1 were tested according to the above-mentioned test methods; the dyeing results with acid dyes are summarized in the table below:

| Acid Dyeing | Mass of Dyed Filament, g | Dye Uptake Rate, % | Fixation rate after soaping, % |
|---|---|---|---|
| PUU-0 | 1. 32 | 10. 68 | 5. 63 |
| PUU-6 | 1. 33 | 62. 45 | 41. 35 |
| PUU-7 | 1. 31 | 31. 25 | 23. 25 |
| PUU-8 | 1. 32 | 32. 23 | 22. 13 |
| PUU-9 | 1. 33 | 29. 25 | 20. 16 |
| PUU-10 | 1. 33 | 15.61 | 9. 30 |
| PUU-11 | 1. 34 | 43. 50 | 30. 21 |

The dyeing results with disperse dyes are summarized in the table below:

| Acid Dyeing | Mass of Dyed Filament, g | Dye Uptake Rate, % | Fixation rate after soaping, % |
|---|---|---|---|
| PUU-0 | 1. 51 | 15. 2 | 7. 65 |

(continued)

| Acid Dyeing | Mass of Dyed Filament, g | Dye Uptake Rate, % | Fixation rate after soaping, % |
|---|---|---|---|
| PUU-6 | 1. 53 | 56. 48 | 42. 65 |
| PUU-7 | 1. 55 | 31. 25 | 24. 12 |
| PUU-8 | 1. 54 | 33. 13 | 23. 15 |
| PUU-9 | 1. 52 | 28. 15 | 22. 16 |
| PUU-10 | 1. 51 | 20. 03 | 11. 94 |
| PUU-11 | 1. 49 | 42. 87 | 29. 87 |

It can be seen from the above tables that compared with conventional polyether-based spandex, the spandex filaments prepared by the method of the present invention show a significant improvement in both dye uptake rate and fixation rate for both acid dyes and disperse dyes.

The alkali resistance of the polyurethane elastic fibers (i.e., spandex yarns) obtained in Embodiments 12-18 and Comparative Example 1 were tested according to the above-mentioned test methods and the test results summarized in the following table:

| Spandex filament | Before boiling in 10g/L KOH alkaline solution | | | After boiling in 10g/L KOH alkaline solution | | |
|---|---|---|---|---|---|---|
| | Tensile stress at 300% elongation, cN | Breaking Strength, cN | Elongation at break, % | Tensile stress at 300% elongation, cN | Breaking Strength, cN | Elongation at break, % |
| PUU-0 | 12.08 | 45.31 | 550 | 11.98 | 43.25 | 553.00 |
| PUU-6 | 15.21 | 38.98 | 515 | 10.25 | 31.28 | 476.00 |
| PUU-7 | 14.19 | 43.83 | 534 | 11.56 | 38.76 | 535.08 |
| PUU-8 | 13.92 | 42.99 | 526 | 11.34 | 38.01 | 524.79 |
| PUU-9 | 13.37 | 41.30 | 522 | 10.89 | 36.52 | 504.21 |
| PUU-10 | 13.04 | 44.39 | 546 | 11.71 | 42.06 | 545.00 |
| PUU-11 | 14.18 | 40.36 | 520 | 10.63 | 34.75 | 492.80 |

It can be seen from the above table that after boiling in the alkali solution, the mechanical properties of PUU-6 (which uses polyether ester polyol as the sole soft segment raw material) show some deterioration, while the mechanical properties of PUU-7 to PUU-11 (which use mixed soft segment raw materials) show little change compared with those before alkali boiling.

From the above test results, it can be concluded that compared with conventional spandex, the dyeable spandex provided by the present invention significantly improves the dye uptake rate and fixation rate of the spandex filaments for both acid dyes and disperse dyes while maintaining its mechanical properties. By adjusting the formula, the problem of deterioration in the alkali resistance of spandex filaments is also avoided, while satisfying the mechanical properties, dyeability and alkali resistance requirements of spandex yarns.

## Claims

**1.** A method for preparing polyether ester polyols, **characterized by** comprising the following steps:

Step 1) Adding polyether diols and polyesters as raw materials into a reaction kettle, wherein the polyesters contain an aromatic dibasic acid polyol ester structure; the polyether diols have a degree of polymerization of 2-20 and a molecular weight of 100-1000; and the molar ratio of aromatic group structures in the polyether diol to those in the polyester is greater than 1.05:1;
Step 2) Heating the reaction kettle to the reaction temperature to carry out a transesterification reaction, and distilling off the small-molecule polyols produced in the transesterification reaction by means of vacuum distillation to prepare the polyether ester polyols, wherein the reaction temperature is higher than the boiling

point of the small-molecule polyols and lower than the boiling point of the polyether diols.

2. The method for preparing polyether ester polyols according to Claim 1, **characterized in that** the polyether diol is one or more of polyethylene glycol, poly-1,3-propanediol, poly-1,2-propanediol, polytetrahydrofuran, polyethylene glycol-1,2-propanediol copolymer, and polytetrahydrofuran-3-methyltetrahydrofuran copolymer.

3. The method for preparing polyether ester polyols according to Claim 1, **characterized in that** the molar ratio of aromatic group structures in the polyether diol to those in the polyester is calculated by the following formula:

$$R=(W+P-36)/(W-A)$$

Where,

R is the molar ratio of aromatic group structures in the polyether diol to those in the polyester;
W is the molecular weight of the target polyether ester polyol, W being 1000-5000;
P is the molecular weight of the aromatic dibasic acid in the polyester;
A is the average molecular weight of the polyether diol.

4. A polyether ester polyol prepared by the method for preparing polyether ester polyols according to Claim 1, **characterized in that** it comprises structures represented by the following Formula (1) and Formula (2), and end-capped alcohol hydroxyl groups:

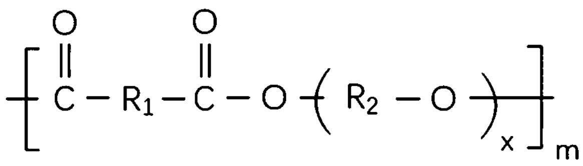

Formula (1)

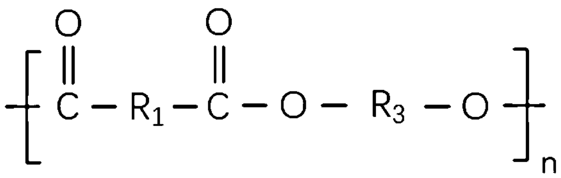

Formula (2)

Where $R_1$ is an aromatic group structure, and the mass content of $R_1$ in the repeating unit of Formula (1) is 4.5%-44%; $R_2$ is at least one saturated alkyl group having 2-5 carbon atoms; x is 2-20; $R_3$ is the residue of the polyol in the polyester raw material;
The mass ratio of Formula (2) in the structure of the polyether ester polyol is less than 20%, and preferably less than 10%;
The number-average molecular weight of the polyether ester polyol is 1000-5000;
The average functionality of the end-capped alcohol hydroxyl groups is 1.95-2.00.

5. The polyether ester polyol according to Claim 4, **characterized in that** $R_2$ is at least two saturated alkyl groups having 2-5 carbon atoms.

6. An easily dyeable spandex, **characterized in that** the soft segment in the molecular structure of the easily dyeable spandex comprises repeating units represented by the following Formula (1):

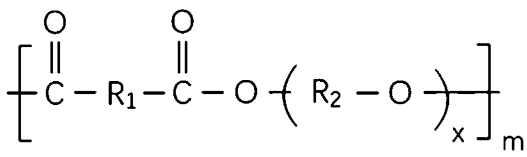

Formula (1)

Where $R_1$ is an aromatic group structure, and the mass content of $R_1$ in the repeating unit is 4.5%-44%; $R_2$ is at least one saturated alkyl group having 2-3 carbon atoms; x is 2-20;

The mass proportion of the repeating units represented by Formula (1) in the soft segment of the spandex is more than 2% and less than 70%.

7. The easily dyeable spandex according to Claim 6, **characterized in that** the soft segment in the molecular structure of the spandex further comprises a polytetramethylene ether segment.

8. A method for preparing easily dyeable spandex, **characterized by** comprising the following steps:

Step 1): End-capping diol raw materials with diisocyanate raw materials to prepare a prepolymer;
Step 2): Dissolving the prepolymer with a polar solvent to obtain a prepolymer solution;
Step 3): Carrying out chain extension on the prepolymer using a mixed solution of a chain extender and a terminator to obtain a polyurethane/polyurethane urea solution;
Step 4): The addition of additives to prepare a spinning dope;
Step 5): Preparing the easily dyeable spandex by passing the prepared spinning dope through spinning equipment;
Whereby the diol raw materials comprise polyether ester polyols with an aromatic group-polyether block structure.

9. The method for preparing easily dyeable spandex according to Claim 8, **characterized in that** the polyether ester polyol comprises repeating units represented by Formula (1) and end-capped alcohol hydroxyl groups:

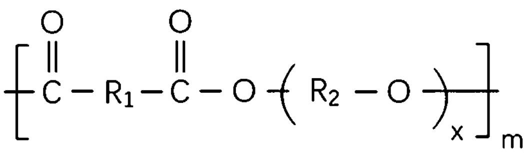 Formula (1)

Where $R_1$ is an aromatic group structure, and the mass content of $R_1$ in the repeating unit is 4.5%-44%; $R_2$ is at least one straight-chain saturated alkyl group with 2-3 carbon atoms; x is 2-20, and preferably 3-10; the average functionality of the end-capped alcohol hydroxyl groups is 1.95-2.00; the number-average molecular weight of the polyether ester polyols is 800-5000, preferably 1000-3500, more preferably 1400-2500, and most preferably 1500-2300.

10. The method for preparing easily dyeable spandex according to Claim 9, **characterized in that** the mass ratio of the polyether ester polyol in the diol raw materials is more than 5% and less than 70%.

11. The method for preparing easily dyeable spandex according to Claim 9, **characterized in that** the diol raw materials further include one or more of polytetrahydrofuran ether diol, polyethylene glycol, polypropylene glycol, polybutylene adipate diol, and copolyester diol of adipic acid and mixed diols.

12. The method for preparing easily dyeable spandex according to Claim 8, **characterized in that** the diol raw materials include polyether ester polyols with an aromatic group-polyether block structure, and the polyether ester polyols comprise repeating units represented by Formula (1) and end-capped alcohol hydroxyl groups:

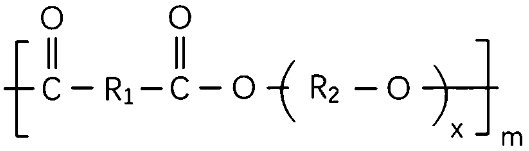

Formula (1)

Where $R_1$ is an aromatic group structure, and the mass content of $R_1$ in the repeating unit is 4.5%-44%; $R_2$ is at least one saturated alkyl group having 2-3 carbon atoms; x is 2-20, and preferably 3-10; the mass percentage of the repeating units in the polyether ester polyol represented by Formula (1) is more than 5% and less than 70%; the average functionality of the end-capped alcohol hydroxyl groups is 1.95-2.00; the number-average molecular weight of the polyether ester polyols is 800-5000, preferably 1000-3500, more preferably 1400-2500, and most preferably 1500-2300.

**13.** A method for preparing easily dyeable spandex, **characterized by** comprising the following steps:

Step a) Adding diisocyanate raw materials, diol raw materials, and small-molecule polyol chain extenders to a reaction vessel respectively;
Step b) Mixing the materials in the reaction vessel, and heating the materials during or
after mixing to carry out the reaction, and performing extrusion and pelletization to prepare polyurethane pellets;
Step c) Drying the polyurethane pellets, adding additives, and then performing melt spinning to obtain the easily dyeable spandex;
Whereby the diol raw materials comprise polyether ester polyols with an aromatic group-polyether block structure.

**14.** The method for preparing easily dyeable spandex according to Claim 13, **characterized in that** the polyether ester polyol is composed of repeating units represented by Formula (1) and end-capped alcohol hydroxyl groups:

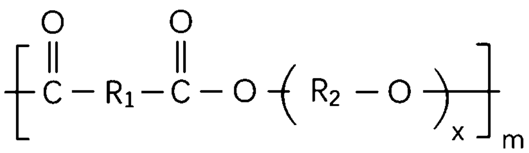

Formula (1)

Where $R_1$ is an aromatic group structure, and the mass content of $R_1$ in the repeating unit is 4.5%-44%; $R_2$ is at least one straight-chain saturated alkyl group with 2-3 carbon atoms; x is 2-20, and preferably 3-10; the average functionality of the end-capped alcohol hydroxyl groups is 1.95-2.00; the number-average molecular weight of the polyether ester polyols is 800-5000, preferably 1000-3500, more preferably 1400-2500, and most preferably 1500-2300;
The mass ratio of the polyether ester polyol in the diol raw materials is more than 5% and less than 70%.

**15.** The method for preparing easily dyeable spandex according to Claim 13, **characterized in that** the polyether ester polyol comprises repeating units represented by Formula (1) and end-capped alcohol hydroxyl groups:

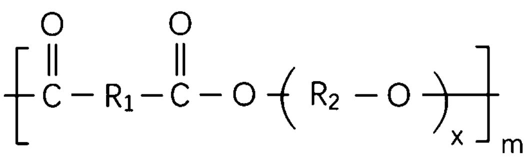

Formula (1)

Where $R_1$ is an aromatic group structure, and the mass content of $R_1$ in the repeating unit is 4.5%-44%; $R_2$ is at least one saturated alkyl group having 2-3 carbon atoms; x is 2-20, and preferably 3-10; the mass percentage of the repeating units in the polyether ester polyol represented by Formula (1) is more than 5%; the average functionality of the end-capped alcohol hydroxyl groups is 1.95-2.00; the number-average molecular weight of the polyether ester polyols is 800-5000, preferably 1000-3500, more preferably 1400-2500, and most preferably 1500-2300.

**16.** A method for preparing polyurethane elastic fibers, non-woven fabrics, films or elastomers by means of solution processing or melt processing, using the polyether ester polyols prepared by the method for preparing polyether ester polyols according to any one of Claims 1 to 3 or the polyether ester polyols according to Claim 4 as raw materials.

**17.** Polyurethane elastic fibers, non-woven fabrics, films or elastomers prepared by the method according to Claim 16.

## INTERNATIONAL SEARCH REPORT

International application No.
**PCT/CN2024/088284**

**A. CLASSIFICATION OF SUBJECT MATTER**

C08G63/91(2006.01)i; C08G63/672(2006.01)i; D01F6/70(2006.01)i; D01F1/02(2006.01)i; C08G18/42(2006.01)i; C08G18/10(2006.01)i; C08G18/48(2006.01)i; C08G18/66(2006.01)i

According to International Patent Classification (IPC) or to both national classification and IPC

**B. FIELDS SEARCHED**

Minimum documentation searched (classification system followed by classification symbols)

IPC:C08G63,C08G18,D01F1,D01F6

Documentation searched other than minimum documentation to the extent that such documents are included in the fields searched

Electronic data base consulted during the international search (name of data base and, where practicable, search terms used)

CNKI, CNTXT, ENTXTC, ENTXT, DWPI: 聚醚酯, 聚酯, 聚对苯二甲酸乙二醇酯, 聚对苯二甲酸丁二醇酯,芳族基团, 芳基, 苯基, 二元酸, 二元羧酸, 二酸, 二甲酸, 酯交换, 聚醚, 聚乙二醇, 聚丙二醇, 聚四亚甲基二醇, 聚四氢呋喃, 氨纶, 聚氨酯, 聚氨基甲酸酯, 纤维, 弹性体, 无纺布, 膜, 易染, 染色, polyetherester?, polyester?, polyterephthalate ethylene, PET, polyterephthalate butylene, PBT, aromatic, aryl, phenyl, diacid?, dicarboxylic, transesterif+, trans-esterif+, polyether?, polyethylene glycol, polypropylene glycol, polytetramethylene glycol, PEG, PPG, PTMG, spandex, polyurethane?, fiber?, elastomer?, nonwoven, non-woven, membrane?, film?, dyeing

**C. DOCUMENTS CONSIDERED TO BE RELEVANT**

| Category* | Citation of document, with indication, where appropriate, of the relevant passages | Relevant to claim No. |
|---|---|---|
| PX | CN 116693799 A (ZHENGZHOU ZHONGYUAN SPANDEX ENGINEERING TECHNOLOGY CO., LTD.) 05 September 2023 (2023-09-05) description, paragraphs [0004]-[0038] | 4, 5, 16, 17 |
| PX | CN 116695278 A (ZHENGZHOU ZHONGYUAN SPANDEX ENGINEERING TECHNOLOGY CO., LTD.) 05 September 2023 (2023-09-05) description, paragraphs [0005]-[0080] | 4-17 |
| PX | CN 116732636 A (ZHENGZHOU ZHONGYUAN SPANDEX ENGINEERING TECHNOLOGY CO., LTD.) 12 September 2023 (2023-09-12) description, paragraphs [0004]-[0076] | 4-17 |
| PX | CN 116836360 A (ZHENGZHOU ZHONGYUAN SPANDEX ENGINEERING TECHNOLOGY CO., LTD.) 03 October 2023 (2023-10-03) description, paragraphs [0006]-[0063] | 4, 5, 16, 17 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 August 2024** | **06 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/088284**

**C. DOCUMENTS CONSIDERED TO BE RELEVANT**

| Category* | Citation of document, with indication, where appropriate, of the relevant passages | Relevant to claim No. |
|---|---|---|
| X | CN 106832307 A (MIRACLL CHEMICALS CO., LTD.) 13 June 2017 (2017-06-13)<br>description, paragraphs [0004]-[0034] | 1-17 |
| X | CN 103080186 A (BASF SE) 01 May 2013 (2013-05-01)<br>description, paragraphs [0003]-[0028] | 4-17 |
| X | CN 105330817 A (DONGGUAN HONGSHI FUNCTIONAL MATERIAL TECHNOLOGY CO., LTD.) 17 February 2016 (2016-02-17)<br>description, paragraphs [0003]-[0022] | 4, 5, 16, 17 |
| X | CN 115028827 A (WANHUA CHEMICAL GROUP CO., LTD.) 09 September 2022 (2022-09-09)<br>description, paragraphs [0006]-[0029] | 4, 5, 16, 17 |
| X | CN 1480477 A (SINOTEX INVESTMENT AND DEVELOPMENT CO., LTD.) 10 March 2004 (2004-03-10)<br>description, page 1, line 24-page 5, line 24 | 4, 5 |
| X | CN 1481406 A (DUPONT DE NEMOURS, INC.) 10 March 2004 (2004-03-10)<br>description, page 4, line 1-page 10, line 10 | 4, 5 |
| A | CN 101636427 A (SABIC INNOVATIVE PLASTICS IP B.V.) 27 January 2010 (2010-01-27)<br>entire document | 1-17 |
| A | CN 112127006 A (YANTAI TAYHO ADVANCED MATERIALS CO., LTD.) 25 December 2020 (2020-12-25)<br>entire document | 1-17 |

Form PCT/ISA/210 (second sheet) (July 2022)

**INTERNATIONAL SEARCH REPORT**
**Information on patent family members**

International application No.
**PCT/CN2024/088284**

| Patent document cited in search report | | | Publication date (day/month/year) | Patent family member(s) | | | Publication date (day/month/year) |
|---|---|---|---|---|---|---|---|
| CN | 116693799 | A | 05 September 2023 | None | | | |
| CN | 116695278 | A | 05 September 2023 | None | | | |
| CN | 116732636 | A | 12 September 2023 | None | | | |
| CN | 116836360 | A | 03 October 2023 | None | | | |
| CN | 106832307 | A | 13 June 2017 | None | | | |
| CN | 103080186 | A | 01 May 2013 | KR | 20130114124 | A | 16 October 2013 |
| | | | | EP | 2614100 | A1 | 17 July 2013 |
| | | | | WO | 2012031997 | A1 | 15 March 2012 |
| CN | 105330817 | A | 17 February 2016 | CN | 105330817 | B | 28 September 2018 |
| CN | 115028827 | A | 09 September 2022 | CN | 115028827 | B | 19 December 2023 |
| CN | 1480477 | A | 10 March 2004 | None | | | |
| CN | 1481406 | A | 10 March 2004 | JP | 2005507967 | A | 24 March 2005 |
| | | | | JP | 4255834 | B2 | 15 April 2009 |
| | | | | AU | 2002335133 | A1 | 12 May 2003 |
| | | | | WO | 03037978 | A2 | 08 May 2003 |
| | | | | WO | 03037978 | A3 | 10 July 2003 |
| | | | | KR | 20040062421 | A | 07 July 2004 |
| | | | | KR | 100933411 | B1 | 22 December 2009 |
| | | | | MXPA | 03005768 | A | 26 February 2004 |
| | | | | ATE | 321804 | T1 | 15 April 2006 |
| | | | | EP | 1448657 | A2 | 25 August 2004 |
| | | | | EP | 1448657 | A4 | 08 December 2004 |
| | | | | EP | 1448657 | B1 | 29 March 2006 |
| | | | | DE | 60210340 | D1 | 18 May 2006 |
| | | | | DE | 60210340 | T2 | 14 December 2006 |
| | | | | US | 6562457 | B1 | 13 May 2003 |
| | | | | CA | 2425646 | A1 | 30 April 2003 |
| | | | | CA | 2425646 | C | 21 February 2012 |
| | | | | CN | 1260268 | C | 21 June 2006 |
| | | | | MX | 238525 | B | 07 July 2006 |
| | | | | IN | 200300397 | P3 | 11 February 2005 |
| CN | 101636427 | A | 27 January 2010 | WO | 2007089748 | A2 | 09 August 2007 |
| | | | | US | 2007225474 | A1 | 27 September 2007 |
| | | | | EP | 1976906 | A2 | 08 October 2008 |
| | | | | IN | 200806744 | P1 | 24 October 2008 |
| | | | | JP | 2009528395 | W | 06 August 2009 |
| | | | | WO | 2007089748 | A3 | 15 October 2009 |
| | | | | US | 7795320 | B2 | 14 September 2010 |
| | | | | US | 2010298498 | A1 | 25 November 2010 |
| | | | | US | 8110609 | B2 | 07 February 2012 |
| CN | 112127006 | A | 25 December 2020 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310424908
- CN 202410455754X
- CN 1147628 C
- CN 1180137 C
- CN 101400838 A
- JP 2009108422 A
- JP 2005205787 A
- WO 2015064776 A1
- GB 1137520 A
- DE 2239478 A1
- JP 2004203933 A
- JP 1996027376 A
- US 3917792 A
- CA 1251294 A